# EUROPEAN PATENT APPLICATION

(11) **EP 4 325 704 A1**
(43) Date of publication of application: **21.02.2024**
(21) Application number: 23190031.7
(22) Date of filing: 07.08.2023
(51) Int. Cl.: H02M 1/00, H02M 1/42, H02M 3/158, H02M 7/487, H02M 7/797

(54) **POWER FACTOR CORRECTION PFC CIRCUIT, CONTROL METHOD, ELECTRIC VEHICLE, AND CHARGING PILE**

(30) Priority: 18.08.2022 CN 202210991225
(71) Applicant: Huawei Digital Power Technologies Co., Ltd., Shenzhen, Guangdong 518043 (CN)
(72) Inventor: ZHANG, Xijun, 518043 Shenzhen (CN); CHEN, Changhao, 518043 Shenzhen (CN); YAO, Jun, 518043 Shenzhen (CN)
(74) Representative: Gill Jennings & Every LLP

(57) **Abstract**

Embodiments of this application provide a power factor correction PFC circuit, a control method, an electric vehicle, and a charging pile. The PFC circuit includes a control module and at least one single-phase correction circuit, and the single-phase correction circuit includes a first inductor, a second inductor, a first bridge arm, a second bridge arm, and a third bridge arm. The control module is configured to control each switching transistor in the first bridge arm, the second bridge arm, and the third bridge arm in the single-phase correction circuit to be turned on or off. The single-phase correction circuit is configured to perform power factor correction on a single-phase alternating current provided by an alternating current circuit and convert the single-phase alternating current into a direct current output to a direct current circuit, or perform power factor correction on a direct current provided by a direct current circuit and convert the direct current into a single-phase alternating current output to an alternating current circuit. According to embodiments of this application, soft switching of the switching transistor is implemented, a turn-on loss and a switching loss of the PFC circuit can be reduced, and performance of the PFC circuit can be improved.

## Description

### TECHNICAL FIELD

This application relates to the field of electronic circuit technologies, and in particular, to a power factor correction PFC circuit, a control method, an electric vehicle, and a charging pile.

### BACKGROUND

With continuous development of power electronic technologies and improved requirements of power of electric devices, multi-phase AC power supply developed based on single-phase AC (alternating current, AC) power supply gradually becomes a mainstream power supply solution, especially three-phase AC power supply. A power supply circuit of single-phase AC power supply and three-phase AC power supply usually includes a power factor correction (power factor correction, PFC) circuit and a direct current (direct current)/DC converter. The PFC circuit is mainly configured to perform rectification and control that an input current waveform and an input voltage waveform tend to be consistent, to improve a power factor. The DC/DC converter is a voltage converter that converts an input direct current voltage into a set direct current voltage and outputs the set direct current voltage, and is mainly used for voltage adjustment on a direct current.

However, currently, the PFC circuit performs rectification through a diode, and implements turn-on and turn-off of a switching transistor in a hard switching manner. Consequently, a turn-on loss and a switching loss of the PFC circuit are large, and overall performance of the PFC circuit is poor.

### SUMMARY

Embodiments of this application disclose a power factor correction PFC circuit, a control method, an electric vehicle, and a charging pile, to implement power factor correction and bidirectional power supply between an alternating current circuit and a direct current circuit by performing soft switching on a switching transistor in the PFC circuit, so that a turn-on loss and a switching loss of the PFC circuit can be reduced, and performance of the PFC circuit can be improved.

According to a first aspect, an embodiment of this application provides a PFC circuit, including a control module and at least one single-phase correction circuit. The single-phase correction circuit includes a first inductor, a second inductor, a first bridge arm, a second bridge arm, and a third bridge arm, and the first bridge arm, the second bridge arm, and the third bridge arm each include at least two switching transistors. A first connection point of the first inductor and the second inductor is connected to a single-phase input/output end of an alternating current circuit, the first inductor is connected to the first bridge arm, the second inductor is connected to the second bridge arm, the first bridge arm and the second bridge arm are connected in parallel to a second connection point and a third connection point, the second connection point and the third connection point are connected to the third bridge arm, and the third bridge arm is connected to a direct current circuit.

The control module is configured to control each switching transistor in the first bridge arm, the second bridge arm, and the third bridge arm in the single-phase correction circuit to be turned on or off. In this way, soft switching of the switching transistor is implemented by controlling the switching transistor in the bridge arm to be turned on or off, a turn-on loss and a switching loss of the PFC circuit canbe reduced, and performance of the PFC circuit can be improved.

The single-phase correction circuit is configured to perform power factor correction on a single-phase alternating current provided by the alternating current circuit and convert the single-phase alternating current into a direct current output to the direct current circuit, or perform power factor correction on a direct current provided by the direct current circuit and convert the direct current into a single-phase alternating current output to the alternating current circuit. In this way, rectification and inversion functions can be implemented, and applicability and stability of the PFC circuit are improved.

In a possible implementation, the first bridge arm includes a first switching transistor, a second switching transistor, and a first bridge arm midpoint, and the second bridge arm includes a third switching transistor, a fourth switching transistor, and a second bridge arm midpoint. The first switching transistor and the second switching transistor are connected in series to the first bridge arm midpoint, the first bridge arm midpoint is connected to the first inductor, the third switching transistor and the fourth switching transistor are connected in series to the second bridge arm midpoint, the second bridge arm midpoint is connected to the second inductor, a connection point of the first switching transistor and the third switching transistor is referred to as the second connection point, and a connection point of the second switching transistor and the fourth switching transistor is referred to as the third connection point.

The first switching transistor of the first bridge arm may be formed by one or more switch transistors connected in parallel parallel. Similarly, the second switching transistor in the first bridge arm may also be formed by one or more switch transistors connected in parallel and the third switching transistor and the fourth switching transistor in the second bridge arm may be one or more switching transistors connected in parallel. A phase difference between carriers of the first switching transistor in the first bridge arm and the third switching transistor in the second bridge arm may be 180 degrees, and a phase difference between carriers of the second switching transistor in the first bridge arm and the fourth switching transistor in the second bridge arm may be 180 degrees.

In a possible implementation, the control module is configured to obtain, based on a current and an inductance value of the first inductor, and/or a current and an inductance value of the second inductor in the single-phase correction circuit, and an input voltage and an output voltage of the single-phase correction circuit, a port voltage of at least one switching transistor in the first bridge arm and the second bridge arm in the single-phase correction circuit; and turn on or off, based on at least one of the current of the first inductor and the current of the second inductor in the single-phase correction circuit, and the port voltage of the at least one switching transistor, each switching transistor in the first bridge arm and the second bridge arm in the single-phase correction circuit. The port voltage of the switching transistor is a voltage between a drain end and a source end of the switching transistor. In this way, through a value and a direction of a current of an inductor in the single-phase correction circuit, and/or a port voltage of a switching transistor, the switching transistor in the single-phase correction circuit is controlled to be turned on or off, a turn-on loss and a switching loss of the PFC circuit can be reduced, accuracy of power control is improved, and performance of the PFC circuit can be improved.

In a possible implementation, when an input signal of die single-phase correction circuit is from the alternating current circuit and is in a positive half cycle, or when an input signal of the single-phase correction circuit is from the direct current circuit and is in a negative half cycle, a primary switching transistor in the first bridge arm in the single-phase correction circuit is the second switching transistor, a primary switching transistor in the second bridge arm in the single-phase correction circuit is the fourth switching transistor. Alternatively, when an input signal of the single-phase correction circuit is from the alternating current circuit and is in a negative half cycle, or when an input signal of the single-phase correction circuit is from the direct current circuit and is in a positive half cycle, a primary switching transistor in the first bridge arm in the single-phase correction circuit is the first switching transistor, and the primary switching transistor in the second bridge arm in the single-phase correction circuit is the third switching transistor.

In a possible implementation, the control module is configured to: when the current of the first inductor in the single-phase correction circuit is equal to a first preset current, or the current of the second inductor in the single-phase correction circuit is equal to a second preset current, turn off a primary switching transistor that is turned on and that is in the first bridge arm and the second bridge arm in the single-phase correction circuit; after a port voltage of a switching transistor connected in series to the primary switching transistor increases, turn on the switching transistor connected in series to the primary switching transistor; when the current of the first inductor flows reversely, or the current of the second inductor flows reversely, turn off the switching transistor connected in series to the primary switching transistor; and when a port voltage of the primary switching transistor is equal to 0, turn on the primary switching transistor.

It may be understood that, when the current of the first inductor in the single-phase correction circuit is equal to the first preset current, it indicates that a voltage of a switching transistor in the first bridge arm connected to the first inductor changes, and a voltage change value is a value of the input voltage. When the current of the second inductor in the single-phase correction circuit is equal to the second preset current, the second switching transistor is turned off, a voltage of a switching transistor in the second bridge arm connected to the second inductor changes, and a voltage change value is the value of the input voltage. Therefore, a switching transistor in an on state may be turned off, a voltage of a switching transistor connected in series to the switching transistor may increase, and then the switching transistor is turned on again. In addition, the switching transistor is turned off when a voltage of the switching transistor flows reversely, and a primary switching transistor is turned on when a port voltage of the primary switching transistor reduces to 0, so that zero-voltage turn-on of the primary switching transistor in the first bridge arm and the second bridge arm may be implemented by using a ZVS technology, a turn-on loss and a switching loss of the PFC circuit can be reduced, and performance of the PFC circuit can be improved.

In a possible implementation, the third bridge arm includes a fifth switching transistor, a sixth switching transistor, a seventh switching transistor, an eighth switching transistor, a fourth connection point, a fifth connection point, and a third bridge arm midpoint. The fifth switching transistor and the sixth switching transistor are connected in series to the fourth connection point, the fourth connection point and the second connection point are connected, the seventh switching transistor and the eighth switching transistor are connected in series to the fifth connection point, the fifth connection point and the third connection point are connected, and the sixth switching transistor and the seventh switching transistor are connected in series to the third bridge arm midpoint, a drain end of the fifth switching transistor, a source end of the eighth switching, and the third bridge arm midpoint are connected to the direct current circuit.

When the third bridge arm works in a steady state, the fifth switching transistor and the seventh switching transistor have a same on state and off state, the sixth switching transistor and the eighth switching transistor have a same on state and off state, the fifth switching transistor (the seventh switching transistor) and the sixth switching transistor (the eighth switching transistor) are in a complementary wave emitting relationship, and a switching frequency is the same as a frequency of an input alternating current.

In a possible implementation, the direct current circuit includes a positive bus, a negative bus, a first capacitor, a second capacitor, and a sixth connection point. The drain end of the fifth switching transistor and the first capacitor are connected to the positive bus, the source end of the eighth switching transistor and the second capacitor are connected to the negative bus, the first capacitor and the second capacitor are connected in series to the sixth connection point, and the sixth connection point is connected to the third bridge arm midpoint and a midpoint or a virtual midpoint of the alternating current circuit.

In a possible implementation, the control module is configured to: when the input signal of the single-phase correction circuit is in the positive half cycle, control the fifth switching transistor and the seventh switching transistor in the single-phase correction circuit to be turned on and the sixth switching transistor and the eighth switching transistor in the single-phase correction circuit to be turned off; or when the input signal of the single-phase correction circuit is in the negative half cycle, control the sixth switching transistor and the eighth switching transistor in the single-phase correction circuit to be turned on and the fifth switching transistor and the seventh switching transistor in the single-phase correction circuit to be turned off. In this way, when the positive bus of the direct current circuit is connected to the first capacitor, and the negative bus of the direct current circuit is connected to the second capacitor, a capacitor in the direct current circuit may be selected to perform charging or discharging through a switching transistor that is turned on and that is in the third bridge arm.

In a possible implementation, a frequency of each switching transistor in the first bridge arm and the second bridge arm is equal, and is greater than a frequency of each switching transistor in the third bridge arm. For example, each switching transistor in the first bridge arm and the second bridge arm is a 500 kHz high-frequency transistor, and each switching transistor in the third bridge arm is a 50 Hz power-frequency transistor. A frequency of a switching transistor in the third bridge arm may be a frequency of an input signal input to the third bridge arm. A frequency of a switching transistor in the first bridge arm and the second bridge arm may be related to a component connected to a bridge arm in the PFC circuit, for example, an inductive and a load.

According to a second aspect, an embodiment of this application further provides a control method for a PFC circuit. The PFC circuit includes a control module and at least one single-phase correction circuit. The single-phase correction circuit includes a first inductor, a second inductor, a first bridge arm, a second bridge arm, and a third bridge arm. A first connection point of the first inductor and the second inductor is connected to a single-phase input/output end of an alternating current circuit, the first inductor is connected to the first bridge arm, the second inductor is connected to the second bridge arm, the first bridge arm and the second bridge arm are connected in parallel to a second connection point and a third connection point, the second connection point and the third connection point are connected to the third bridge arm, and the third bridge arm is connected to a direct current circuit. The first bridge arm, the second bridge arm, and the third bridge arm each include at least two switching transistors.

The control method includes: obtaining a current and an inductance value of the first inductor, and/or a current and an inductance value of the second inductor in the single-phase correction circuit, and an input voltage and an output voltage of the single-phase correction circuit by using the control module; and turning on or off each switching transistor in the third bridge arm in the single-phase correction circuit by using the control module, and turning on or off each switching transistor in the first bridge arm and the second bridge arm in the single-phase correction circuit based on the current and the inductance value of the first inductor, and/or the current and the inductance value of the second inductor in the single-phase correction circuit, and the input voltage and the output voltage of the single-phase correction circuit.

It may be understood that, by controlling each switching transistor in the first bridge arm, the second bridge arm, and the third bridge arm in the single-phase correction circuit to be turned on or off, a turn-on loss and a switching loss of the PFC circuit may be reduced, power factor correction and bidirectional power supply between the alternating current circuit and the direct current circuit are implemented, applicability and stability of the PFC circuit are improved, and performance of the PFC circuit may be improved. In addition, based on the current and the inductance value of the first inductor, and/or the current and the inductance value of the second inductor in the single-phase correction circuit, and the input voltage and the output voltage of the single-phase correction circuit, each switching transistor in the first bridge arm and the second bridge arm in the single-phase correction circuit is turned on or off, thereby improving accuracy of power control, and further improving applicability and stability of the PFC circuit.

In a possible implementation, the turning on or off each switching transistor in the first bridge arm and the second bridge arm in the single-phase correction circuit based on the current and the inductance value of the first inductor, and/or the current and the inductance value of the second inductor in the single-phase correction circuit, and the input voltage and the output voltage of the single-phase correction circuit includes: obtaining, based on the current and the inductance value of the first inductor, and/or the current and the inductance value of the second inductor in the single-phase correction circuit, and the input voltage and the output voltage of the single-phase correction circuit, a port voltage of at least one switching transistor in the first bridge arm and the second bridge arm in the single-phase correction circuit, where the port voltage of the switching transistor is a voltage between a drain end and a source end of the switching transistor; and turning on or off, based on at least one of the current of the first inductor and the current of the second inductor in the single-phase correction circuit, and the port voltage of the switching transistor, each switching transistor in the first bridge arm and the second bridge arm in the single-phase correction circuit. In this way, through a value and a direction of a current of an inductor in the single-phase correction circuit, and/or a port voltage of a switching transistor, the switching transistor in the single-phase correction circuit is controlled to be turned on or off, a turn-on loss and a switching loss of the PFC circuit may be reduced, accuracy of power control is improved, and performance of the PFC circuit may be improved.

In a possible implementation, the first bridge arm includes a first switching transistor, a second switching transistor, and a first bridge arm midpoint, and the second bridge arm includes a third switching transistor, a fourth switching transistor, and a second bridge arm midpoint. The first switching transistor and the second switching transistor are connected in series to the first bridge arm midpoint, the first bridge arm midpoint is connected to the first inductor, the third switching transistor and the fourth switching transistor are connected in series to the second bridge arm midpoint, the second bridge arm midpoint is connected to the second inductor, a connection point of the first switching transistor and the third switching transistor is referred to as the second connection point, and a connection point of the second switching transistor and the fourth switching transistor is referred to as the third connection point.

When an input signal of the single-phase correction circuit is from the alternating current circuit and is in a positive half cycle, or when an input signal of the single-phase correction circuit is from the direct current circuit and is in a negative half cycle, a primary switching transistor in the first bridge arm in the single-phase correction circuit is the second switching transistor, and a primary switching transistor in the second bridge arm in the single-phase correction circuit is the fourth switching transistor; or when an input signal of the single-phase correction circuit is from the alternating current circuit and is in a negative half cycle, or when an input signal of the single-phase correction circuit is from the direct current circuit and is in a positive half cycle, a primary switching transistor in the first bridge arm in the single-phase correction circuit is the first switching transistor, and a primary switching transistor in the second bridge arm in the single-phase correction circuit is the third switching transistor.

The turning on or off, based on at least one of the current of the first inductor and the current of the second inductor in the single-phase correction circuit, and the port voltage of the switching transistor, each switching transistor in the first bridge arm and the second bridge arm in the single-phase correction circuit includes: when the current of the first inductor in the single-phase correction circuit is equal to a first preset current, or the current of the second inductor in the single-phase correction circuit is equal to a second preset current, turning off a primary switching transistor that is turned on and that is in the first bridge arm and the second bridge arm in the single-phase correction circuit; after a port voltage of a switching transistor connected in series to the primary switching transistor increases, turning on the switching transistor connected in series to the primary switching transistor; when the current of the first inductor flows reversely, or the current of the second inductor flows reversely, turning off the switching transistor connected in series to the primary switching transistor; and when a port voltage of the primary switching transistor is 0, turning on the primary switching transistor.

It may be understood that, when the current of the first inductor in the single-phase correction circuit is equal to the first preset current, it indicates that a voltage of a switching transistor in the first bridge arm connected to the first inductor changes, and a voltage change value is a value of the input voltage. When the current of the second inductor in the single-phase correction circuit is equal to the second preset current, the second switching transistor is turned off, a voltage of a switching transistor in the second bridge arm connected to the second inductor changes, and a voltage change value is the value of the input voltage. Therefore, the switching transistor in an on state may be turned off, a voltage of a switching transistor connected in series to the switching transistor may increase, and then the switching transistor is turned on again. In addition, the switching transistor is turned off when a voltage of the switching transistor flows reversely, and a primary switching transistor is turned on when a port voltage of the primary switching transistor reduces to 0, so that zero-voltage turn-on of the primary switching transistor in tire first bridge arm and the second bridge arm may be implemented by using a ZVS technology, a turn-on loss and a switching loss of the PFC circuit can be reduced, and performance of the PFC circuit can be improved.

In some possible implementations, the third bridge arm includes a fifth switching transistor, a sixth switching transistor, a seventh switching transistor, an eighth switching transistor, a fourth connection point, a fifth connection point, and a third bridge arm midpoint. The fifth switching transistor and the sixth switching transistor are connected in series to the fourth connection point, the fourth connection point is connected to the second connection point, the seventh switching transistor and the eighth switching transistor are connected in series to the fifth connection point, the fifth connection point is connected to the third connection point, the sixth switching transistor and the seventh switching transistor are connected in series to the third bridge arm midpoint, and a drain end of the fifth switching transistor, a source end of the eighth switching transistor, and the third bridge arm midpoint are connected to the direct current circuit.

In a possible implementation, the direct current circuit includes a positive bus, a negative bus, a first capacitor, a second capacitor, and a sixth connection point. The drain end of the fifth switching transistor and the first capacitor are connected to the positive bus, the source end of the eighth switching transistor and the second capacitor are connected to the negative bus, the first capacitor and the second capacitor are connected in series to the sixth connection point, and the sixth connection point is connected to the third bridge arm midpoint and a midpoint or a virtual midpoint of the alternating current circuit.

In some possible implementations, the turning on or off each switching transistor in the third bridge arm in the single-phase correction circuit may include the following steps: when the input signal of the single-phase correction circuit is in the positive half cycle, controlling the fifth switching transistor and the seventh switching transistor in the single-phase correction circuit to be turned on and the sixth switching transistor and the eighth switching transistor in the single-phase correction circuit to be turned off; or when the input signal of the single-phase correction circuit is in the negative half cycle, controlling the sixth switching transistor and the eighth switching transistor in the single-phase correction circuit to be turned on and the fifth switching transistor and the seventh switching transistor in the single-phase correction circuit to be turned off. In this way, when the positive bus of the direct current circuit is connected to the first capacitor, and the negative bus of the direct current circuit is connected to the second capacitor, a capacitor in the direct current circuit may be selected to perform charging or discharging through a switching transistor that is turned on and that is in the third bridge arm.

In a possible implementation, a frequency of each switching transistor in the first bridge arm and the second bridge arm is equal, and is greater than a frequency of each switching transistor in the third bridge arm.

According to a third aspect, an embodiment of this application further provides an electric vehicle, including a power battery, a DC/DC converter, and the PFC circuit described in the first aspect. An input side of the PFC circuit is connected to an alternating current charging pile, an output side of the PFC circuit is connected to an input side of the DC/DC converter, and an output side of the DC/DC converter is connected to the power battery. The PFC circuit is configured to: perform power factor correction on an alternating current voltage output by the alternating current charging pile, and convert the alternating current voltage into a direct current of a first voltage value output to the DC/DC converter. The DC/DC converter is configured to convert the direct current of the first voltage value into a direct current of a second voltage value output to the power battery, so that the alternating current charging pile may charge the power battery in the electric vehicle.

According to a fourth aspect, an embodiment of this application further provides another electric vehicle, including a power battery, a DC/DC converter, and the PFC circuit described in the first aspect. An output side of the power battery is connected to an input side of the DC/DC converter, an output side of the DC/DC converter is connected to an input side of the PFC circuit, and an output side of the PFC circuit is connected to an alternating current load. The DC/DC converter is configured to convert a direct current of a second voltage value output by the power battery into a direct current of a first voltage value output to the PFC circuit. The PFC circuit is configured to: perform power factor correction on the direct current of the first voltage value, and convert the direct current into an alternating current output to the alternating current load, so that the alternating current load may be charged through the power battery in the electric vehicle, thereby improving applicability of the PFC circuit.

In this embodiment of this application, the electric vehicle may include but is not limited to an electric vehicle, an electric amusement device, an electric train, an electric bicycle, a golf cart, or another electric vehicle. This may be specifically determined based on an actual application scenario, and is not limited herein.

According to a fifth aspect, an embodiment of this application further provides a direct current charging pile, including a charging plug, a DC/DC converter, and the PFC circuit described in the first aspect. An input end of the PFC circuit is connected to an alternating current mains, an output end of the PFC circuit is connected to an input side of the DC/DC converter, and an output side of the DC/DC converter is connected to the charging plug. The PFC circuit is configured to: perform power factor correction on an alternating current output by the alternating current mains, and convert the alternating current into a direct current of a first voltage value output to the DC/DC converter. The DC/DC converter is configured to convert the direct current of the first voltage into a direct current of a second voltage output to the power battery when the charging plug is connected to the power battery of the electric vehicle, so that the direct current charging pile may charge the power battery in the electric vehicle.

According to a sixth aspect, an embodiment of this application further provides a power supply system, including a PFC circuit, an alternating current power source, and a direct current load. The PFC circuit is configured to: perform power factor correction on an alternating current provided by the alternating current power source, and convert the alternating current into a direct current output to the direct current load.

In this embodiment of this application, the alternating current power source may be a device that provides an alternating current for the PFC circuit, for example, a household transformer, a household meter, a DC/AC converter (direct current/alternating current converter), or a charging pile. The direct current load may be an energy storage battery (for example, a nickel-cadmium battery, a nickel-hydrogen battery, a lithium-ion battery, or a lithium polymer battery), a solar battery, or another DC/DC converter (for example, a buck converter, a boost converter, or a buck-boost converter). The direct current load may alternatively be an artificial intelligence chip, an image processor, a mobile phone terminal, a photovoltaic inverter, a server that provides a computer service in a computing center, an electric vehicle, and the like. In this way, the alternating current power source may charge the direct current load through the PFC circuit, and perform power factor correction.

It should be noted that, an alternating current charging pile or a direct current charging pile may be included between the alternating current power source and the PFC circuit. When the alternating current charging pile is disposed between the alternating current power source and the PFC circuit, the PFC circuit and the DC/DC converter may be disposed in a power module of the direct current load, for example, an on-board charger (On-board charger, OBC) in an electric vehicle or a battery module in a server in a computing center. In this way, an alternating current output by the alternating current charging pile may be converted into a direct current through the PFC circuit and the DC/DC converter in the direct current load, and a battery (for example, a power battery in the electric vehicle) in the direct current load may be charged. When the direct current charging pile is disposed between the alternating current power source and the PFC circuit, the PFC circuit and the DC/DC converter may be disposed in the direct current charging pile. In this way, an alternating current provided by the alternating current power source for the direct current charging pile may be converted into a direct current through the PFC circuit and the DC/DC converter in the direct current charging pile, and the direct current load is charged.

According to a seventh aspect, an embodiment of this application further provides another power supply system, including a PFC circuit, an alternating current load, and a direct current power source. The PFC circuit is configured to: perform power factor correction on a direct current output by the direct current power source, and convert the direct current into an alternating current output to the alternating current load.

In this embodiment of this application, the direct current power source is used as a power source that provides a direct current, and may include a direct current production device, for example, a photovoltaic module, a wind power generation module, a geothermal power generation module, or a biomass gas power generation module, or may include a dischargeable electric appliance, for example, a mobile phone, a computer, an electric water heater, or an electric water kettle, or an electric vehicle. The alternating current load is used as a load that can simulate a real environment (using an electrical device), usually has functions of adjusting a load size, a short circuit, an overcurrent, a dynamic characteristic, and the like, may include a motor, a resistor, a light bulb, and the like, and may further include the foregoing alternating current charging pile and the like. In this way, the direct current power source may charge the alternating current load through the PFC circuit, and perform power factor correction.

According to an eighth aspect, an embodiment of this application further provides a chip system, including a processor, a memory, and an interface circuit. The memory, the interface circuit, and the processor are interconnected through a line, the memory stores instructions, and the instructions are used by the processor to perform the method in the second aspect.

According to a ninth aspect, an embodiment of this application further provides a computer device, including a memory and a processor connected to the memory. The memory is configured to store a computer program, and the processor is configured to invoke the computer program, so that the computer device performs the method provided in the second aspect.

According to a tenth aspect, an embodiment of this application further provides a computer-readable storage medium. The computer-readable storage medium stores a computer program. The computer program is suitable for being loaded and executed by a processor, so that a computer device having the processor performs the method provided in the second aspect.

According to an eleventh aspect, an embodiment of this application further provides a computer program product, including computer instructions. The computer instructions are stored in a computer-readable storage medium, and a processor of a computer device reads the computer instructions from the computer-readable storage medium and executes the computer instructions, so that the computer device performs the method provided in the second aspect.

It should be understood that implementation and beneficial effects of the foregoing aspects of this application may be referred to each other.

### BRIEF DESCRIPTION OF DRAWINGS

FIG. 1 is a schematic diagram of a structure of a power supply system according to an embodiment of this application;
FIG. 2 is a schematic diagram of a structure of another power supply system according to an embodiment of this application;
FIG. 3 to FIG. 8 are respectively schematic diagrams of structures of a PFC circuit according to an embodiment of this application;
FIG. 9 is a schematic diagram of a structure of a control module according to an embodiment of this application;
FIG. 10A, FIG. 10B, and FIG. 10C are respectively schematic circuit diagrams of a closed loop according to an embodiment of this application;
FIG. 11 is a waveform diagram of a switching transistor according to an embodiment of this application;
FIG. 12, FIG. 13, and FIG. 14 are respectively schematic circuit diagrams of another closed loop according to an embodiment of this application; and
FIG. 15 is a schematic flowchart of a control method for a PFC circuit according to an embodiment of this application.

### DESCRIPTION OF EMBODIMENTS

A PFC circuit provided in embodiments of this application is applicable to a power supply system. The power supply system may be applied to an alternating current power supply scenario, or may be applied to a direct current power supply scenario. In the alternating current power supply scenario, an alternating current power source may be a device that provides an alternating current for the PFC circuit, for example, a household transformer, a household meter, a DC/AC converter, and a charging pile. In the alternating current power supply scenario, the alternating current power source supplies power to a direct current load through the PFC circuit. The direct current load may be an energy storage battery (for example, a nickel-cadmium battery, a nickel-hydrogen battery, a lithium-ion battery, or a lithium polymer battery), a solar battery, or another DC/DC converter (for example, a buck converter, a boost converter, or a buck-boost converter). The above direct current load may also be an artificial intelligence chip, an image processor, a mobile phone terminal, a photovoltaic inverter, a server that provides a computer service in a computing center, an electric vehicle, and the like. The electric vehicle may include but is not limited to an electric vehicle, an electric amusement device, an electric train, an electric bicycle, a golf cart, or another electric vehicle. This may be specifically determined based on an actual application scenario, and is not limited herein.

In this application, an implementation form of the alternating current power source and the direct current load is not limited, and a type of the power supply system is not limited. The power supply system may be a single-phase power supply system, a three-phase power supply system, or a power supply system of more phases, for example, a five-phase power supply system or a seven-phase power supply system. This application uses a single-phase power supply system or a three-phase power supply system as an example for description.

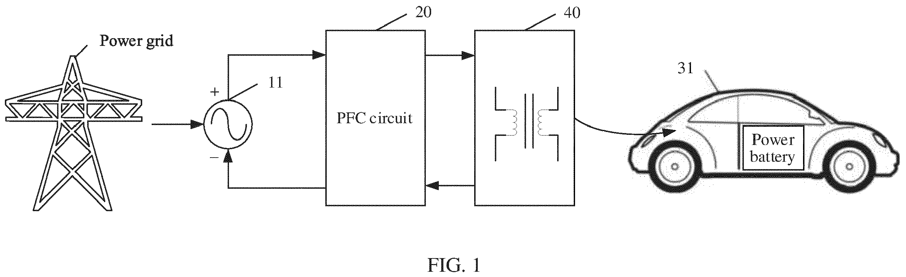

In an alternating current power supply scenario, a function of the PFC circuit is to implement power factor correction and implement functions of rectification and voltage boosting. The following uses an example in which the alternating current power source is an alternating current mains provided by a power grid, and the direct current load is a power battery in an electric vehicle for description. A DC/DC converter configured to implement a power change may be further included between the PFC circuit and the direct current load. FIG. 1 is a schematic diagram of a structure of a power supply system according to an embodiment of this application. As shown in FIG. 1, the power supply system includes an alternating current power source 11, a PFC circuit 20, a DC/DC converter 40, and a direct current load 31. An input side of the PFC circuit 20 is connected to the alternating current power source 11, and an output side of the PFC circuit 20 is connected to an input side of the DC/DC converter 40. An output side of the DC/DC converter 40 is connected to the direct current load 31. If the alternating current power source 11 may provide an alternating current with a valid value of a third voltage value V3 for the PFC circuit 20, the PFC circuit 20 may perform rectification and voltage boosting on the alternating current based on the control method for the PFC circuit provided in this application, to obtain a direct current of a first voltage value V1 (V1 is greater than V3), and provide the direct current of the first voltage value V1 for the DC/DC converter 40. The DC/DC converter 40 converts the direct current of the first voltage value V1 into a direct current of a second voltage value V2 required by the direct current load 31, and provides the direct current of the second voltage value V2 for the direct current load 31, so that the direct current load 31 can work normally.

It should be noted that, an alternating current charging pile or a direct current charging pile may be included between the alternating current power source 11 and the PFC circuit 20. When the alternating current charging pile is disposed between the alternating current power source 11 and the PFC circuit 20, the PFC circuit 20 and the DC/DC converter 40 may be disposed in a power module of the direct current load 31, for example, an on-board charger (On-board charger, OBC) in an electric vehicle or a battery module in a server in a computing center. In this way, an alternating current output by the alternating current charging pile may be converted into a direct current through the PFC circuit 20 and the DC/DC converter 40 in the direct current load 31, and a battery (for example, a power battery in the electric vehicle) in the direct current load 31 may be charged. When the direct current charging pile is disposed between the alternating current power source 11 and the PFC circuit 20, the PFC circuit 20 and the DC/DC converter 40 may be disposed in the direct current charging pile. In this way, an alternating current provided by the alternating current power source 11 for the direct current charging pile may be converted into a direct current through the PFC circuit 20 and the DC/DC converter 40 in the direct current charging pile, and the direct current load 31 may be charged.

In a direct current power supply scenario, a function of the PFC circuit is to implement power factor correction and implement inversion and voltage reduction. A direct current power source is used as a power source that provides a direct current, and may include direct current production device, for example, a photovoltaic module, a wind power generation module, a geothermal power generation module, or a biomass gas power generation module, or may include a dischargeable electric applian ce, for example, a mobile phone, a computer, an electric water heater, or an electric water kettle, or an electric vehicle. An alternating current load is used as a load that can simulate a real environment (using an electrical device), usually has functions of adjusting a load size, a short circuit, an overcurrent, a dynamic characteristic, and the like, may include a motor, a resistor, a light bulb, and the like, and may further include the foregoing alternating current charging pile and the like. In this way, the direct current power source may charge the alternating current load through the PFC circuit, and perform power factor correction.

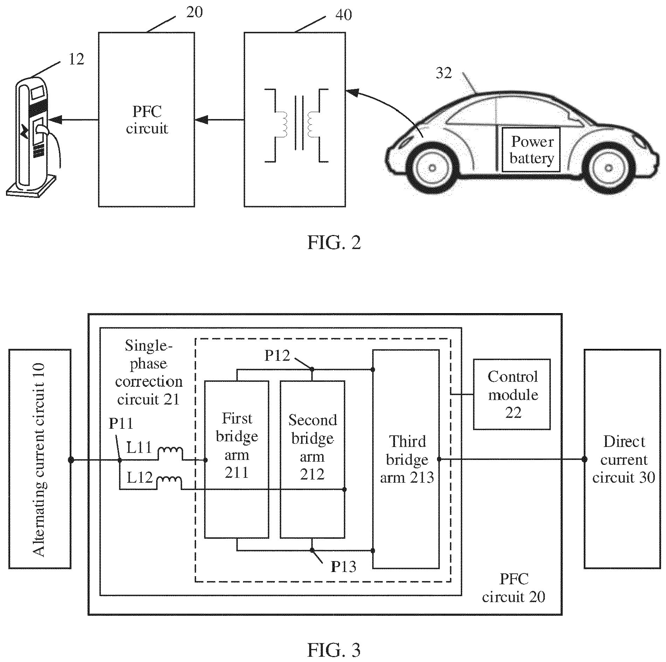

An implementation form of the direct current power source is not specifically limited in this application. The following uses an example in which the direct current power source is a power battery in an electric vehicle and the alternating current load is an alternating current charging pile for description. FIG. 2 is a schematic diagram of a structure of another power supply system according to an embodiment of this application. The power supply system includes an alternating current load 12, a PFC circuit 20, a DC/DC converter 40, and a direct current power source 32. An input end of the direct current power source 32 is connected to an input side of the DC/DC converter 40, an output side of the DC/DC converter 40 is connected to an input side of the PFC circuit 20, and an output side of the PFC circuit 20 is connected to an input end of the alternating current load 12. If the direct current power source 32 may output a direct current of a second voltage value V2 to the DC/DC converter 40, the DC/DC converter 40 converts the input direct current of the second voltage value V2 into a direct current of a first voltage value V1, and provides the direct current to the PFC circuit 20. The PFC circuit 20 may perform voltage reduction and inversion on the direct current of the first voltage value V1 based on the control method for the PFC circuit provided in this application, to obtain an alternating current with an effective value of a third voltage value V3 required by the alternating current load 12, so that the alternating current load 12 can work normally.

It should be understood that the foregoing is merely an example of a usage scenario of the PFC circuit provided in this application, and is not exhaustive. The PFC circuit provided in this embodiment of this application may be further used in another power supply scenario in which rectification or inversion needs to be performed.

The following describes, with reference to FIG. 3 to FIG. 14, the PFC circuit provided in this application and an operating principle of the PFC circuit.

FIG. 3 is a schematic diagram of a structure of a PFC circuit according to an embodiment of this application. As shown in FIG. 3, a PFC circuit 20 may include a control module 22 and at least one single-phase correction circuit 21. It should be understood that each single-phase correction circuit in this embodiment of this application is connected in parallel between an alternating current circuit 10 and a direct current circuit 30 in a same connection manner. The following uses the single-phase correction circuit 21 as an example to further describe a specific structure of the PFC circuit 20. The alternating current circuit 10 may include the foregoing alternating current power source, and the direct current circuit 30 may include the foregoing DC/DC converter and direct current load. Alternatively, the alternating current circuit 10 may include the foregoing alternating current load, and the direct current circuit 30 may include the foregoing DC/DC converter and direct current power source.

As shown in FIG. 3, the single-phase correction circuit 21 includes a first inductor L11, a second inductor L12, a first bridge arm 211, a second bridge arm 212, and a third bridge arm 213. In this embodiment of this application, the first bridge arm 211, the second bridge arm 212, and the third bridge arm 213 each include at least two switching transistors, and each switching transistor may be a silicon (silicon, Si) semiconductor material, or a silicon carbide (silicon carbide, SiC) of a third-generation wide band gap semiconductor material, or a gallium nitride (gallium nitride, GaN), or a diamond (diamond), or a zinc oxide (zinc oxide, ZnO), or a metal-oxide-semiconductor field-effect transistor (metal-oxide-semiconductor field-effect transistor, MOSFET) made of another material, or an insulated gate bipolar transistor (insulated gate bipolar transistor, IGBT), and the like. This is not limited herein. For example, the switching transistor in the first bridge arm 211 is an IGBT, and the switching transistor in the third bridge arm 213 is an MOSFET. In this way, the switching transistor is used to replace a rectifier diode, and soft switching is performed on the switching transistor, so that a turn-on loss and a switching loss of the PFC circuit may be reduced, and performance of the PFC circuit may be improved.

In some feasible implementations, a frequency of each switching transistor in the first bridge arm 211 and the second bridge arm 212 is equal, and is greater than a frequency of each switching transistor in the third bridge arm 213. For example, each switching transistor in the first bridge arm 211 and the second bridge arm 212 is a 500 kHz high-frequency transistor, and each switching transistor in the third bridge arm 213 is a 50 Hz power-frequency transistor. A frequency of the switching transistor in the third bridge arm 213 may be a frequency of an input signal input to the third bridge arm 213. Frequencies of the switching transistors in the first bridge arm 211 and the second bridge arm 212 may be related to a component that is in the PFC circuit 20 and that is connected to a bridge arm, for example, an inductor and a load.

In some feasible implementations, both the first bridge arm 211 and the second bridge arm 212 are configured to convert an alternating current provided by the alternating current circuit 10 into a direct current output to the third bridge arm 213, or convert a direct current input by the third bridge arm 213 into an alternating current output to the alternating current circuit 10. The third bridge arm 213 is configured to convert a direct current from the first bridge arm 211 and/or the second bridge arm 212 into a voltage of a direct current applicable to the direct current circuit 30, or convert a voltage of a direct current from the direct current circuit 30 into a voltage of a direct current applicable to the first bridge arm 211 and/or the second bridge arm 212. In this way, conversion between an alternating current and a direct current is implemented through the first bridge arm 211 and the second bridge arm 212, and conversion of a direct current voltage is implemented through the third bridge arm 213, so that a rectification or inversion function may be implemented. The first bridge arm 211, the second bridge arm 212, and the third bridge arm 213 may be further configured to compensate for a phase difference between a current and a voltage, to implement power factor correction, thereby increasing a bearing capacity of an existing circuit, improving the voltage, and reducing a loss.

In some feasible implementations, the control module 22 may include but is not limited to a control board, a control chip, or a controller. For example, the control module 22 may include a battery management system (battery management system, BMS), a micro control unit (micro control unit, MCU), a central processing unit (central processing unit, CPU), another general purpose processor, a digital signal processor (digital signal processor, DSP), an application specific integrated circuit (application specific integrated circuit, ASIC), a field-programmable gate array (field-programmable gate array, FPGA) or another programmable logic device, a discrete gate or transistor logic device, a discrete hardware component, and the like.

As shown in FIG. 3, a first connection point P11 of the first inductor L11 and the second inductor L12 is connected to a single-phase input/output end of the alternating current circuit 10, the first inductor L11 is connected to the first bridge arm 211, and the second inductor L12 is connected to the second bridge arm 212. In other words, the alternating current circuit 10 may be connected to the first bridge arm 211 through the first inductor L11, and the alternating current circuit 10 is further connected to the second bridge arm 212 through the second inductor L12. The first bridge arm 211 and the second bridge arm 212 are connected in parallel to a second connection point P12 and a third connection point P13, both the second connection point P12 and the third connection point P13 are connected to the third bridge arm 213, and the third bridge arm 213 is connected to the direct current circuit 30.

The control module 22 is configured to control each switching transistor in the first bridge arm 211, the second bridge arm 212, and the third bridge arm 213 in the single-phase correction circuit 21 to be turned on or off, so that the alternating current circuit 10 and the direct current circuit 30 may form a closed loop through a switching transistor that is turned on in the first bridge arm 211, the second bridge arm 212, and the third bridge arm 213. The single-phase correction circuit 21 may be configured to: perform power factor correction on a single-phase alternating current provided by the alternating current circuit 10, convert the single-phase alternating current into a direct current, and provide the direct current for the direct current circuit 30 (a direct current load). The single-phase correction circuit 21 may also be configured to: perform power factor correction on a direct current provided by the direct current circuit 30 (a direct current power source), convert the direct current into a single-phase alternating current, and provide the single-phase alternating current for the alternating current circuit 10 (an alternating current load). In this way, by controlling each switching transistor in the first bridge arm, the second bridge arm, and the third bridge arm in the single-phase correction circuit to be turned on or off, a turn-on loss and a switching loss of the PFC circuit can be reduced, power factor correction and bidirectional power supply between the alternating current circuit and the direct current circuit are implemented, applicability and stability of the PFC circuit are improved, and performance of the PFC circuit can be improved.

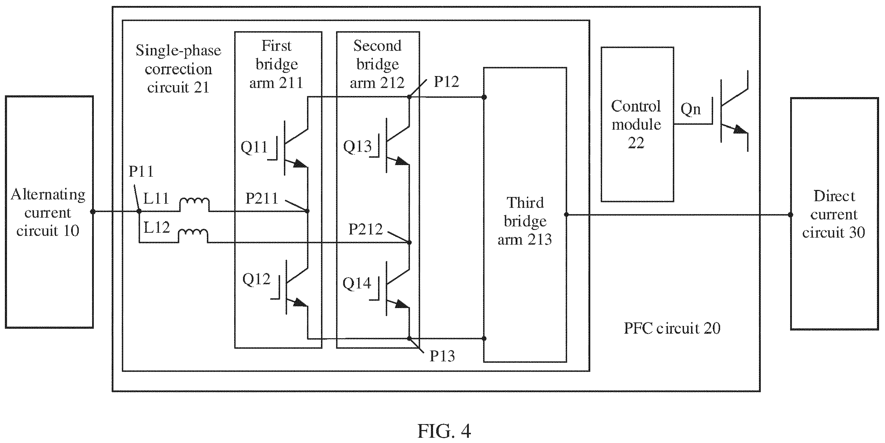

For structures of the first bridge arm 211 and the second bridge arm 212, refer to FIG. 4. For the alternating current circuit 10, the first inductor L11, the second inductor L12, the third bridge arm 213, the control module 22, and the direct current circuit 30, refer to the foregoing description or the following description, and details are not described herein again. As shown in FIG. 4, the first bridge arm 211 in the single-phase correction circuit 21 in the PFC circuit 20 includes a first switching transistor Q11, a second switching transistor Q12, and a first bridge arm midpoint P211, and the second bridge arm 212 includes a third switching transistor Q13, a fourth switching transistor Q14, and a second bridge arm midpoint P212.

The first switching transistor Q11 and the second switching transistor Q12 are connected in series to the first bridge arm midpoint P211, and the first bridge arm midpoint P211 is connected to the first inductor L11. The third switching transistor Q13 and the fourth switching transistor Q14 are connected in series to the second bridge arm midpoint P212, and the second bridge arm midpoint P212 is connected to the second inductor L12. A connection point of the first switching transistor Q11 and the third switching transistor Q13 is used as a parallel connection point of the first bridge arm 211 and the second bridge arm 212, and is referred to as the second connection point P12. A connection point of the second switching transistor Q12 and the fourth switching transistor Q14 is used as another parallel connection point of the first bridge arm 211 and the second bridge arm 212, and is referred to as the third connection point P13. As shown in FIG. 4, both the second connection point P12 and the third connection point P13 are connected to the third bridge arm 213.

In some feasible implementations, the first switching transistor of the first bridge arm may be formed by one or more switch transistors connected in parallel. Similarly, the second switching transistor in the first bridge arm may also be formed by one or more switch transistors connected in parallel, and the third switching transistor and the fourth switching transistor in the second bridge arm may be formed by one or more switch transistors connected in parallel. A phase difference between carriers of the first switching transistor in the first bridge arm and the third switching transistor in the second bridge arm may be 180 degrees, and a phase difference between carriers of the second switching transistor in the first bridge arm and the fourth switching transistor in the second bridge arm may be 180 degrees. For example, a phase difference between carriers of the first switching transistor Q11 and the third switching transistor Q13 is 180 degrees, or a phase difference between carriers of the second switching transistor Q12 and the fourth switching transistor Q14 is 180 degrees. In some cases, for example, a dead zone stage, a switching transistor in a bridge arm is controlled to be in an off state. In some cases, for example, a dead zone stage, the switching transistor in the first bridge arm is controlled to be in an off state.

A switching transistor Qn connected to the control module 22 may be the first switching transistor Q11, the second switching transistor Q12, the third switching transistor Q13, and the fourth switching transistor Q14 in FIG. 4, and may further include the switching transistor in the third bridge arm 213 that is not shown in FIG. 4, or another switching transistor in the first bridge arm 211 and the second bridge arm 212, which is not limited herein. In this way, the alternating current circuit 10 may supply power to the third bridge arm 213 through a loop formed by the first inductor L11 and/or the second inductor L12, and one or moreswitching transistors that are turned on in the first bridge arm 211 and the second bridge arm 212, so that the third bridge arm 213 supplies power to the direct current circuit 30 by one or moreswitching transistors that are turned on in the third bridge arm 213. Similarly, the direct current circuit 30 may supply power to the third bridge arm 213 through one or more switching transistors that are turned on in the third bridge arm 213, and supply power to the alternating current circuit 10 through the loop formed by the first inductor L11 and/or the second inductor L12, and one or more switching transistors that are turned on in the first bridge arm 211 and the second bridge arm 212.

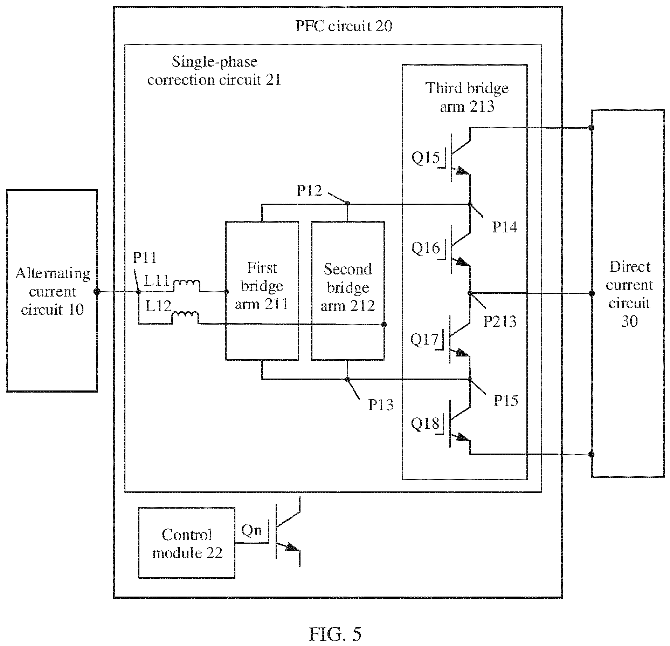

For a structure of the third bridge arm 213, refer to FIG. 5. For the alternating current circuit 10, the first inductor L11, the second inductor L12, the first bridge arm 211, the second bridge arm 212, the control module 22, and the direct current circuit 30 in FIG. 5, refer to the foregoing description or the following description, and details are not described herein again. The switching transistor Qn connected to the control module 22 may be a fifth switching transistor Q15, a sixth switching transistor Q16, a seventh switching transistor Q17, and an eighth switching transistor Q18 in FIG. 5, and may further include a switching transistor that is not shown in FIG. 5, for example, the first switching transistor Q11, the second switching transistor Q12, the third switching transistor Q13, and the fourth switching transistor Q14 shown in FIG. 4.

As shown in FIG. 5, the third bridge arm 213 includes the fifth switching transistor Q15, the sixth switching transistor Q16, the seventh switching transistor Q17, the eighth switching transistor Q18, a fourth connection point P14, a fifth connection point P15, and a third bridge arm midpoint P213. The fifth switching transistor Q15 and the sixth switching transistor Q16 are connected in series to the fourth connection point P14, and the fourth connection point P14 is connected to the second connection point P12 connected in parallel to the first bridge arm 211 and the second bridge arm 212. The seventh switching transistor Q17 and the eighth switching transistor Q18 are connected in series to the fifth connection point P15, and the fifth connection point P15 is connected to the third connection point P13 connected in parallel to the first bridge arm 211 and the second bridge arm 212. In other words, the first bridge arm 211, the second bridge arm 212, and the third bridge arm 213 may be connected to the fourth connection point P14 through the second connection point P12, and may also be connected to the fifth connection point P15 through the third connection point P13.

As shown in FIG. 5, the sixth switching transistor Q16 and the seventh switching transistor Q17 are connected in series to the third bridge arm midpoint P213. A drain end of the fifth switching transistor Q15, a source end of the eighth switching transistor Q18, and the third bridge arm midpoint P213 are all connected to the direct current circuit 30. In this way, the alternating current circuit 10 may supply a direct current to the third bridge arm 213 through the first inductor L11 and/or the second inductor L12 and one or moreswitching transistors that are turned on in the first bridge arm 211 and the second bridge arm 212, and then the third bridge arm 213 may supply power to the direct current circuit 30 through at least one of the drain end of the fifth switching transistor Q15, the source end of the eighth switching transistor Q18, and the third bridge arm midpoint P213. Similarly, the direct current circuit 30 may supply a direct current to the third bridge arm 213 through at least one of the drain end of the fifth switching transistor Q15, the source end of the eighth switching transistor Q18, and the third bridge arm midpoint P213, and then the third bridge arm 213 may supply power to the alternating current circuit 10 through at least one of the fourth connection point P14 and the fifth connection point P15, one or moreswitching transistors that are turned on in the first bridge arm 211 and the second bridge arm 212, and/or the first inductor L11 and/or the second inductor L12.

When the third bridge arm 213 works in a steady state, the fifth switching transistor Q15 and the seventh switching transistor Q17 have a same on state and off state, the sixth switching transistor Q16 and the eighth switching transistor Q18 have a same on state and off state, and the fifth switching transistor Q15 (the seventh switching transistor Q17) and the sixth switching transistor Q16 (the eighth switching transistor Q18) are in a complementary wave emitting relationship, a switching frequency of the switching transistor in the third bridge arm 213 is the same as a frequency of a direct current input to the third bridge arm 213. Therefore, in this embodiment of this application, the control module 22 may control the fifth switching transistor Q15 and the seventh switching transistor Q17 to be turned on, and control the sixth switching transistor Q16 and the eighth switching transistor Q18 to be turned off at the same time. Alternatively, the control module 22 may control the sixth switching transistor Q16 and the eighth switching transistor Q18 to be turned on, and control the fifth switching transistor Q15 and the seventh switching transistor Q17 to be turned off.

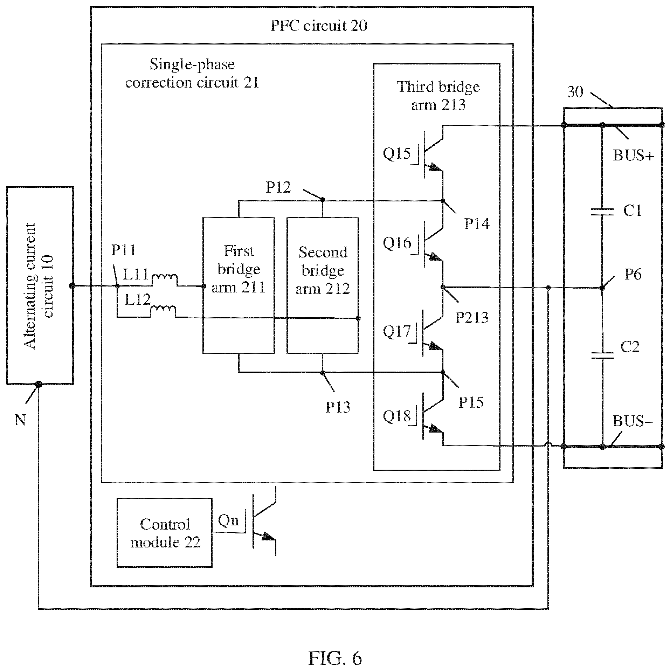

For a structure of the direct current circuit 30, refer to FIG. 6. For the first inductor L11, the second inductor L12, the first bridge arm 211, the second bridge arm 212, the third bridge arm 213, and the control module 22 in FIG. 6, refer to the foregoing description or the following description. Details are not described herein again. As shown in FIG. 6, the direct current circuit 30 may include a positive bus BUS+, a negative bus BUS-, a first capacitor C1, a second capacitor C2, and a sixth connection point P6. The drain end of the fifth switching transistor Q15 and the first capacitor C1 are connected to the positive bus BUS+, the source end of the eighth switching transistor Q18 and the second capacitor C2 are connected to the negative bus BUS-, the first capacitor C1 and the second capacitor C2 are connected in series to the sixth connection point P6, the sixth connection point P6 is connected to the third bridge arm midpoint P213, and the sixth connection point P6 is further connected to a midpoint or a virtual midpoint N of the alternating current circuit 10.

In some feasible implementations, the first capacitor C1 and the second capacitor C2 are used as energy storage devices in the direct current circuit 30. If the PFC circuit 20 includes three single-phase correction circuits, and when the PFC circuit 20 reaches a stable state, voltages at two ends of the first capacitor C1 and the second capacitor C2 are stable at 1/2 of a second voltage value V2 of the direct current circuit 30, so that a voltage drop between the positive bus BUS+ and the negative bus BUS- is stable at a value of V2.

The midpoint (which may also be referred to as a neutral point) of the alternating current circuit 10 is a point in a winding of a transformer or a generator corresponding to the alternating current circuit, and an absolute value of a voltage between the point and each single-phase input/output end of the alternating current circuit 10 is equivalent. The virtual midpoint (which may also be referred to as a virtual midpoint or a virtual neutral point) of the alternating current circuit 10 is a common connection point connected to each single-phase input/output end of the alternating current circuit 10 through a corresponding capacitor, and an absolute value of avoltage between the common connection point and each single-phase input/output end of the alternating current circuit 10 is equivalent.

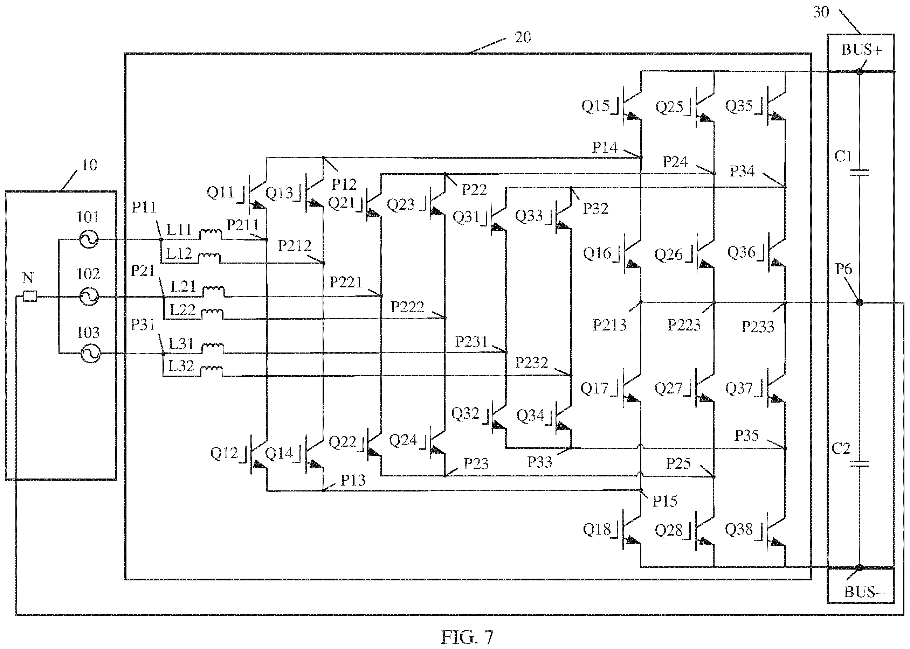

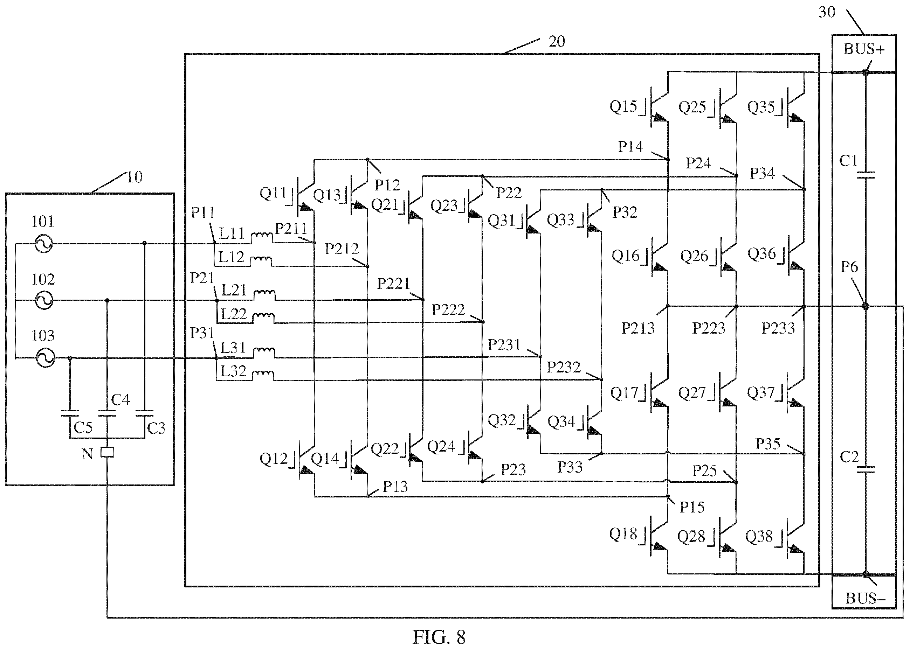

For another structure of the PFC circuit, refer to FIG. 7 and FIG. 8. In FIG. 7, the sixth connection point P6 of the direct current circuit 30 is connected to the midpoint N in the alternating current circuit 10, and in FIG. 8, the sixth connection point P6 of the direct current circuit 30 is connected to the virtual midpoint N in the alternating current circuit 10. In FIG. 7, a first alternating current source 101, a second alternating current source 102, and a third alternating current source 103 are all connected to the midpoint N of the alternating current circuit 10, and the midpoint N is connected to the sixth connection point P6 of the direct current circuit 30.

As shown in FIG. 8, the alternating current circuit 10 may further include a third capacitor C3, a fourth capacitor C4, and a fifth capacitor C5. One end of the third capacitor C3 is connected to one end of the first alternating current source 101 and a first connection point P11 of a first inductor L11 and a second inductor L12 in a first single-phase correction circuit. One end of the fourth capacitor C4 is connected to one end of the second alternating current source 102 and a first connection point P21 of a first inductor L21 and a second inductor L22 in a second single-phase correction circuit. One end of the fifth capacitor C5 is connected to one end of the third alternating current source 103 and a first connection point P31 of a first inductor L31 and a second inductor L32 in a third single-phase correction circuit. The other end of the third capacitor C3, the other end of the fourth capacitor C4, and the other end of the fifth capacitor C5 are connected and used as the virtual midpoint N of the alternating current circuit 10. The virtual midpoint N is connected to a third bridge arm midpoint P213 (in the first single-phase correction circuit), a third bridge arm midpoint P223 (in the second single-phase correction circuit), a third bridge arm midpoint P233 (in the third single-phase correction circuit) in the PFC circuit 20, and the sixth connection point P6 in the direct current circuit 30.

In FIG. 7 and FIG. 8, the other end of the first alternating current source 101, the other end of the second alternating current source 102, and the other end of the third alternating current source 103 are used as three single-phase input/output ends in the alternating current circuit 10, and the three single-phase input/output ends are connected to one single-phase correction circuit. Each single-phase correction circuit includes a first inductor, a second inductor, a first bridge arm, a second bridge arm, and a third bridge arm. In addition, the first bridge arm may include a first switching transistor, a second switching transistor, and a first bridge arm midpoint connected in series to the first switching transistor and the second switching transistor. The second bridge arm may include a third switching transistor, a fourth switching transistor, and a second bridge arm midpoint connected in series to the third switching transistor and the fourth switching transistor. The third bridge arm may include a fifth switching transistor, a sixth switching transistor, a seventh switching transistor, an eighth switching transistor, a fourth connection point connected in series to the fifth switching transistor and the sixth switching transistor, a fifth connection point connected in series to the seventh switching transistor and the eighth switching transistor, and a third bridge arm midpoint connected in series to the sixth switching transistor and the seventh switching transistor. The third bridge arm is connected to the first bridge arm and the second bridge arm through the fourth connection point and the second connection point of the first switching transistor and the third switching transistor, and the third bridge arm is connected to the first bridge arm and the second bridge arm through the fifth connection point and the third connection point of the second switching transistor and the fourth switching transistor.

The first single-phase correction circuit may refer to the single-phase correction circuit 21 described in FIG. 4 to FIG. 6, and includes the first inductor L11, the second inductor L12, a 1^{st} first bridge arm connected in series to the first switching transistor Q11 and the second switching transistor Q12, a first second bridge arm connected in series to the third switching transistor Q13 and the fourth switching transistor Q14, and a first third bridge arm connected in series to the fifth switching transistor Q15, the sixth switching transistor Q16, the seventh switching transistor Q17 and the eighth switching transistor Q18. Connection relationships between the foregoing switching transistors, and connection relationships and types between the switching transistors and inductors and capacitors are not described herein again.

Similarly, the second single-phase correction circuit may include the first inductor L21, the second inductor L22, a 2^{nd} first bridge arm connected in series to a first switching transistor Q21 and a second switching transistor Q22, a 2^{nd} second bridge arm connected in series to a third switching transistor Q23 and a fourth switching transistor Q24, and a 2^{nd} third bridge arm connected in series to a fifth switching transistor Q25, a sixth switching transistor Q26, a seventh switching transistor Q27 and an eighth switching transistor Q28. A first bridge arm midpoint P221 connected in series to die first switching transistor Q21 and the second switching transistor Q22 is connected to the first inductor L21, and a second bridge arm midpoint P222 connected in series to the third switching transistor Q23 and the fourth switching transistor Q24 is connected to the second inductor L22. A second connection point P22 of the first switching transistor Q21 and the third switching transistor Q23 is connected to a fourth connection point P24 of the fifth switching transistor Q25 and the sixth switching transistor Q26, and a third connection point P23 of the second switching transistor Q22 and the fourth switching transistor Q24 is connected to a fifth connection point P25 of the seventh switching transistor Q27 and the eighth switching transistor Q28. A drain end of the fifth switching transistor Q25 is connected to the positive bus BUS+ of the direct current circuit 30, a source end of the eighth switching transistor Q28 is connected to the negative bus BUS- of the direct current circuit 30, and the sixth switching transistor Q26 and the seventh switching transistor Q27 are connected in series to the 2^{nd} third bridge arm midpoint P223, the midpoint or virtual midpoint N of the alternating current circuit 10 is connected to the third bridge arm midpoint P223 and the sixth connection point P6 of the direct current circuit 30.

Similarly, the third single-phase correction circuit may include the first inductor L31, the second inductor L32, a third first bridge arm connected in series to a first switching transistor Q31 and a second switching transistor Q32, a third second bridge arm connected in series to a third switching transistor Q33 and a fourth switching transistor Q34, and a 3^{rd} third bridge arm connected in series to a fifth switching transistor Q35, a sixth switching transistor Q36, a seventh switching transistor Q37 and an eighth switching transistor Q38. A first bridge arm midpoint P231 connected in series to the first switching transistor Q31 and the second switching transistor Q32 is connected to the first inductor L31, and a second bridge arm midpoint P232 connected in series to the third switching transistor Q33 and the fourth switching transistor Q34 is connected to the second inductor L32. A second connection point P32 of the first switching transistor Q31 and the third switching transistor Q33 is connected to a fourth connection point P34 of the fifth switching transistor Q35 and the sixth switching transistor Q36, and a third connection point P33 of the second switching transistor Q32 and the fourth switching transistor Q34 is connected to a fifth connection point P35 of the seventh switching transistor Q37 and the eighth switching transistor Q38. A drain end of the fifth switching transistor Q35 is connected to the positive bus BUS+ of the direct current circuit 30, a source end of the eighth switching transistor Q38 is connected to the negative bus BUS- of the direct current circuit 30, and the sixth switching transistor Q36 and the seventh switching transistor Q37 are connected in series to the 3^{rd} third bridge arm midpoint P233, the midpoint or virtual midpoint N of the alternating current circuit 10 is connected to the third bridge arm midpoint P233 and the sixth connection point P6 of the direct current circuit 30.

And as shown in FIG. 7 and FIG. 8, the direct current circuit 30 may further include the first capacitor C1 and the second capacitor C2 that are connected in series. A first end of the first capacitor C1 and a first end of the second capacitor C2 are connected to the midpoint or the virtual midpoint provided by the alternating current circuit 10. A second end of the first capacitor C1 is connected to the positive bus BiJS+ of the direct current circuit 30. A second end of the second capacitor C2 is connected to the negative bus BUS- of the direct current circuit 30. The first end of the first capacitor C1 and the second capacitor C2 are used as energy storage devices in the direct current circuit 30. When the entire PFC circuit reaches a stable state, voltages at two ends of the first capacitor C1 and the second capacitor C2 are stable at V1/2, so that voltage drop between the positive bus BUS+ and the negative bus BUS- is stable at a value of V1.

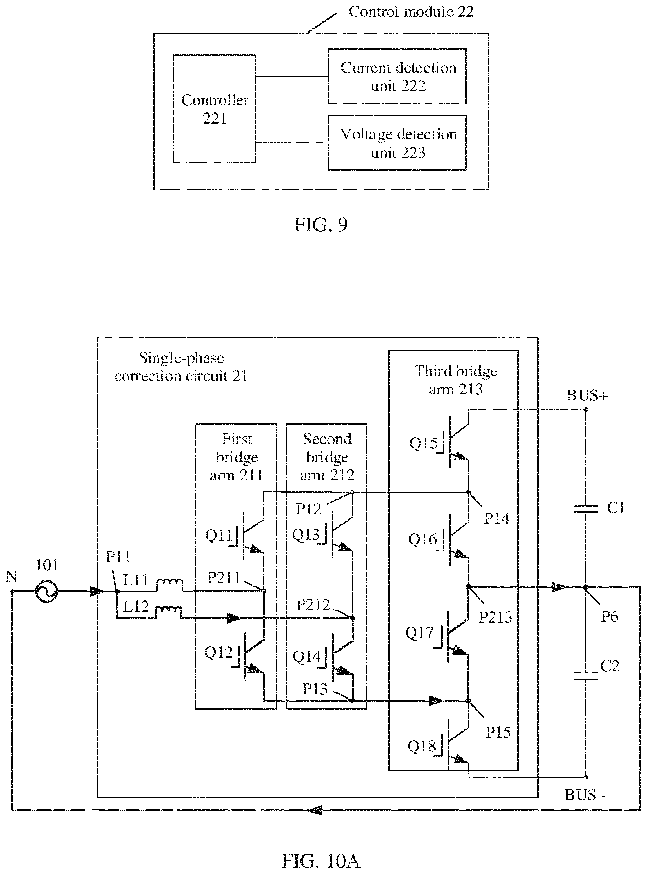

FIG. 9 is a schematic diagram of a structure of a control module according to an embodiment of this application. As shown in FIG. 9, the control module 22 may specifically include a controller 221, a current detection unit 222, and a voltage detection unit 223. The controller 221 may be connected to a control end of each switching transistor in a single-phase correction circuit, so that the control module 22 may control each switching transistor in the single-phase correction circuit to be turned on or off through the controller 221. The controller 221 is further connected to the current detection unit 222 and the voltage detection unit 223. The current detection unit 222 may be separately connected to inductors in a single-phase correction circuit 21, for example, a first inductor L11 and a second inductor L12 in the single-phase correction circuit 21. The current detection unit 222 is configured to detect a current of the first inductor and/or a current of the second inductor, and provide the current to the controller 221.

In some feasible implementations, the controller 221 may be configured to control, based on a current of an inductor that is detected by the current detection unit 222, an on state of each switching transistor in a first bridge arm, a second bridge arm, and a third bridge arm in the single-phase correction circuit.

For example, when an average current direction of the inductor is the same as a current direction of an input voltage signal of the single-phase correction circuit 21, a fifth switching transistor and a seventh switching transistor are turned on, and a sixth switching transistor and an eighth switching transistor are turned off; and when the average current direction of the inductor is opposite to the current direction of the input voltage signal of the single-phase correction circuit 21, the sixth switching transistor and the eighth switching transistor are turned on, and the fifth switching transistor and the seventh switching transistor are turned off. For another example, after a first switching transistor and a third switching transistor are turned on, if the current of the second inductor is equal to a second preset current, the first switching transistor and the third switching transistor are turned off, and a second switching transistor and a fourth switching transistor are turned on with a delay; and after the second switching transistor and the fourth switching transistor are turned on, if the current of the first inductor is equal to a first preset current, the second switching transistor and the fourth switching transistor are turned off, and the first switching transistor and the third switching transistor are turned on with a delay. In this way, a current of an inductor connected to the single-phase correction circuit is used to control the switching transistor in the single-phase correction circuit to be turned on or off, thereby improving accuracy of controlling the switching transistor.

In some feasible implementations, the voltage detection unit 223 may be configured to detect an input voltage and an output voltage of the single-phase correction circuit, and provide the input voltage and the output voltage to the controller 221. The controller 221 or the control module 22 may be configured to obtain, based on the current and an inductance value of the first inductor, and/or the current and an inductance value of the second inductor in the single-phase correction circuit, and the input voltage and the output voltage of the single-phase correction circuit, a port voltage of at least one switching transistor in the first bridge arm and the second bridge arm. The controller 221 may be configured to turn on or off, based on at least one of the current of the first inductor and the current of the second inductor in the single-phase correction circuit, and the port voltage of the at least one switching transistor in the first bridge arm and the second bridge arm, each switching transistor in the first bridge arm and the second bridge arm in the single-phase correction circuit.

The port voltage of the switching transistor is a voltage between a drain end and a source end of the switching transistor. The turning on or off each switching transistor in the first bridge arm and the second bridge arm in the single-phase correction circuit may include the following three types: switching a switching transistor in an on state to an off state: switching a switching transistor in an off state to an on state; and controlling all switching transistors to be in an off state.

The following uses the single-phase correction circuit 21 as an example. Gates of the first switching transistor Q11, the second switching transistor Q12, the third switching transistor Q13, the fourth switching transistor Q14, the fifth switching transistor Q15, the sixth switching transistor Q16, the seventh switching transistor Q17, and the eighth switching transistor Q18 are respectively connected to the controller 221. One end of the current detection unit 222 is connected to one end of the first inductor L11 and one end of the second inductor L12, and the other end is connected to the controller 221. One end of the voltage detection unit 223 is connected to the controller 221, and another two ends are respectively connected to an input end and an output end of the single-phase correction circuit 21, so that the current detection unit 222 may detect a current flowing through the first inductor L11 and/or the second inductor L12, and provide a detection result to the controller 221. The voltage detection unit 223 may detect the input voltage and the output voltage of the single-phase correction circuit 21, and provide the input voltage and the output voltage to the controller 221. In this way, the controller 221 or the control module 22 may obtain, based on the current and the inductance value of the first inductor L11, and/or the current and the inductance value of the second inductor L12, and the input voltage and the output voltage of the single-phase correction circuit 21, a port voltage of the first switching transistor Q11, a port voltage of the second switching transistor Q12, a port voltage of the third switching transistor Q13, and a port voltage of the fourth switching transistor Q14. Then, the controller 221 or the control module 22 may turn on or off, based on at least one of the current of the first inductor L11 and/or the current of the second inductor L12, the port voltage of the first switching transistor Q11, the port voltage of the second switching transistor Q12, the port voltage of the third switching transistor Q13, and the port voltage of the fourth switching transistor Q14, each switching transistor in the first bridge arm 211 and the second bridge arm 212 in the single-phase correction circuit. It may be understood that, through a value and a direction of a current of the inductor in the single-phase correction circuit, and/or the port voltage of the switching transistor, the switching transistor in the single-phase correction circuit is controlled to be turned on or off, soft switching may be implemented by using a ZVS technology, a turn-on loss and a switching loss of the PFC circuit may be reduced, accuracy of voltage adjustment is improved, and performance of the PFC circuit may be improved.

In some possible examples, the voltage detection unit 223 may be connected to a connection end, other than a control end connected to the controller 221, in a plurality of connection ends of each switching transistor, and is configured to: detect a port voltage of each switching transistor, and obtain the port voltage of each switching transistor.

It should be understood that the foregoing merely describes a connection relationship between the current detection unit 222 and the voltage detection unit 223 and a corresponding function through the inductor or the switching transistor in the single-phase correction circuit 21 as an example. In an actual implementation, the current detection unit 222 may also be connected to an inductor in a single-phase correction circuit, for example, a second single-phase correction circuit and a third single-phase correction circuit, and implement a corresponding current detection function. Similarly, the voltage detection unit 223 may also be connected to a switching transistor in a single-phase correction circuit, for example, the second single-phase correction circuit and the third single-phase correction circuit, and implement a corresponding voltage detection function. Herein, it should be understood that different implementations of the current detection unit 222 and the voltage detection unit 223 in the PFC circuit provided in this application may be directly deduced from the examples provided above. Details are not described herein again in this application.

It should be noted that, in a case in which current detection or voltage detection does not need to be performed, the control module 22 may not include the current detection unit 222 or the voltage detection unit 223. In other words, whether the control module 22 includes the current detection unit 222 or the voltage detection unit 223 may be set based on an actual application requirement. This is not specifically limited in this application.

In this embodiment of this application, an input signal of the single-phase correction circuit may be from an alternating current circuit 10, and the input signal of the single-phase correction circuit may be a voltage signal and/or a current signal of an alternating current provided by the alternating current circuit 10. The input signal of the single-phase correction circuit may also be from a direct current circuit 30, and the input signal of the single-phase correction circuit may be a voltage signal and/or a current signal of a direct current provided by the direct current circuit 30. A power source current signal is a waveform that periodically changes, and a cycle type of an input voltage current signal of the single-phase correction circuit may be a positive half cycle or a negative half cycle.

When the input signal of the single-phase correction circuit is from the alternating current circuit 10, a cycle T1 of a first alternating current source 101 is used as an example. A time period in which a current direction is flowing out from a single-phase input/output end of the first alternating current source 101 and flowing in from a midpoint or a virtual midpoint N of the alternating current circuit 10 is a positive half cycle corresponding to the cycle T1. It may also be understood that, in this time period, a single-phase alternating current provided by the first alternating current source 101 is in the positive half cycle. A time period in which the current direction is flowing out from the midpoint or the virtual midpoint N of the alternating current circuit 10 and flowing in from the single-phase input/output end of the first alternating current source 101 is a negative half cycle corresponding to the cycle T1. It may also be understood that, in this time period, the single-phase alternating current provided by the first alternating current source 101 is in the negative half cycle.

When the input signal of the single-phase correction circuit is from the direct current circuit 30, a cycle T2 of the direct current circuit 30 is used as an example. A time period in which a current direction is flowing out from a positive bus end BUS+ of the direct current circuit 30 and flowing in from a connection point of the direct current circuit 30 and the midpoint or the virtual midpoint N of the alternating current circuit 10 is a positive half cycle corresponding to the cycle T2. It may also be understood that, in this time period, the direct current provided by the direct current circuit 30 is in a positive half cycle. A time period in which the current direction is flowing out from the connection point of the direct current circuit 30 and the midpoint or the virtual midpoint N of the alternating current circuit 10 and flowing in from a negative bus end BUS- of the direct current circuit 30 is a negative half cycle corresponding to the cycle T2. It may also be understood that, in this time period, the direct current provided by the direct current circuit 30 is in the negative half cycle.

A switching transistor that is turned on and a switching transistor that is turned off are not limited in this application. In some possible implementations, the control module 22 is configured to: when the input signal of the single-phase correction circuit is in the positive half cycle, control the fifth switching transistor and the seventh switching transistor in the single-phase correction circuit to be turned on and the sixth switching transistor and the eighth switching transistor in the single-phase correction circuit to be turned off; or when the input signal of the single-phase correction circuit is in the negative half cycle, control the sixth switching transistor and the eighth switching transistor in the single-phase correction circuit to be turned on, and the fifth switching transistor and the seventh switching transistor in the single-phase correction circuit to be turned off. In other words, whether the input signal of the single-phase correction voltage is from the alternating current circuit 10 or the direct current circuit 30, when the input signal is in the positive half cycle, the fifth switching transistor and the seventh switching transistor in the third bridge arm may be turned on, and the sixth switching transistor and the eighth switching transistor in the third bridge arm may be turned off. When the input signal is in the negative half cycle, the sixth switching transistor and the eighth switching transistor in the third bridge arm may be turned on, and the fifth switching transistor and the seventh switching transistor in the third bridge arm may be turned off. When the positive bus BUS+ of the direct current circuit 30 is connected to the first capacitor C1, and the negative bus BUS- of the direct current circuit 30 is connected to the second capacitor C2, a capacitor in the direct current circuit 30 may be selected to perform charging or discharging through a switching transistor that is turned on in the third bridge arm.

In some possible implementations, when the input signal of the single-phase correction circuit is from the alternating current circuit 10 and is in the positive half cycle, or when the input signal of the single-phase correction circuit is from the direct current circuit 30 and is in the negative half cycle, a primary switching transistor in the first bridge arm in the single-phase correction circuit is the second switching transistor, and a primary switching transistor in the second bridge arm in the single-phase correction circuit is the fourth switching transistor. Alternatively, when the input signal of the single-phase correction circuit is from the alternating current circuit 10 and is in the negative half cycle, or when the input signal of the single-phase correction circuit is from the direct current circuit 30 and is in the positive half cycle, a primary switching transistor in the first bridge arm in the single-phase correction circuit is the first switching transistor, and a primary switching transistor in the second bridge arm in the single-phase correction circuit is the third switching transistor. In this way, control efficiency of the PFC circuit may be improved by controlling the primary switching transistor to be turned on or off.

In some possible implementations, the control module 22 is configured to: when the current of the first inductor in the single-phase correction circuit is equal to the first preset current, or the current of the second inductor in the single-phase correction circuit is equal to the second preset current, turn off a primary switching transistor that is turned on and that is in the first bridge arm and the second bridge arm in the single-phase correction circuit; after a port voltage of a switching transistor connected in series to the primary switching transistor increases, turn on the switching transistor connected in series to the primary switching transistor; when the current of the first inductor flows reversely, or the current of the second inductor flows reversely, turn off the switching transistor connected in series to the primary switching transistor; and when the port voltage of the primary switching transistor is equal to 0, turn on the primary switching transistor.

Values of the first preset current and the second preset current are not limited in this application. The value of the first preset current may be a value of a current corresponding to a port voltage of the first switching transistor (the third switching transistor) that is equal to 0, and the value of the second preset current may be a value of a current corresponding to a port voltage of the second switching transistor (the fourth switching transistor) that is equal to 0. It may be understood that, when the current of the first inductor in the single-phase correction circuit is equal to the first preset current, it indicates that a voltage of a switching transistor in the first bridge arm connected to the first inductor changes, and a voltage change value is a value of the input voltage. For example, if an input voltage of the first bridge arm is 40 V, the first switching transistor is turned on when a voltage of the first switching transistor changes from 40 V to 0 V, and the voltage of the second switching transistor changes from 0 V to 40 V. When the current of the second inductor in the single-phase correction circuit is equal to the second preset current, the second switching transistor is turned off, a voltage of a switching transistor in the second bridge arm connected to the second inductor changes, and a voltage change value is the value of the input voltage. Therefore, a switching transistor in an on state may be turned off, a voltage of a switching transistor connected in series to the switching transistor may increase, and then the switching transistor is turned on again. In addition, the switching transistor is turned off when a voltage of the switching transistor flows reversely, and switching soft switching is implemented. In addition, a primary switching transistor is turned on when a port voltage of the primary switching transistor reduces to 0, so that zero-voltage turn-on of the primary switching transistor in a high-frequency transistor may be implemented by using the ZVS technology, a turn-on loss and a switching loss of the PFC circuit may be reduced, and performance of the PFC circuit may be improved.

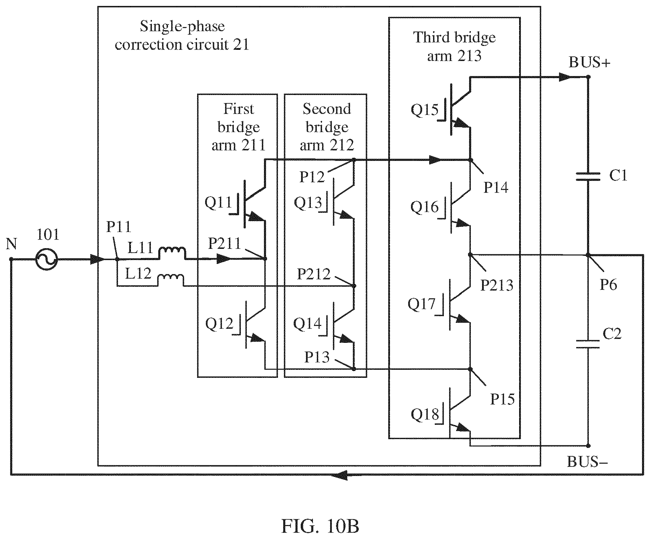

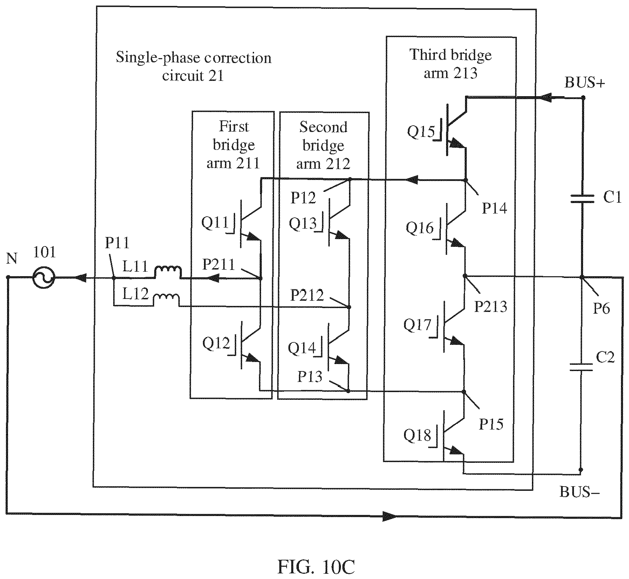

The following is described by using examples based on a source and a signal cycle of the input signal of the single-phase correction circuit in four cases. Case 1: The input signal of the single-phase correction circuit is from the alternating current circuit and is in the positive half cycle. For a schematic circuit diagram of a closed loop formed by a switching transistor that is turned on in Case 1, refer to FIG. 10A, FIG. 10B, and FIG. 10C. As shown in FIG. 10A, the control module may first control the second switching transistor Q12, the fourth switching transistor Q14, the fifth switching transistor Q15, and the seventh switching transistor Q17 to be turned on, and the sixth switching transistor Q16, the eighth switching transistor Q18, the first switching transistor Q11, and the third switching transistor Q13 to be turned off. In this way, a single-phase alternating current output by the first alternating current source 101 may flow to the second switching transistor Q12 through the first inductor L11, and may further flow to the fourth switching transistor Q14 through the second inductor L12, then flow to the seventh switching transistor Q17 through the second switching transistor Q12 and the fourth switching transistor Q14, to flow in the sixth connection point P6 of the direct current circuit, and flow in the midpoint or the virtual midpoint N of the alternating current circuit through the sixth connection point P6. In this case, the current of the second inductor L12 is equal to the second preset current. As shown in FIG. 10B, the second switching transistor Q12 and the fourth switching transistor Q14 are turned off. Then, the single-phase alternating current output by the first alternating current source 101 may flow to the first switching transistor Q11 through the first inductor L11, and may further flow to the third switching transistor Q13 through the second inductor L12, then flow to the fifth switching transistor Q15 through the first switching transistor Q11 and the third switching transistor Q13, and flow to the positive bus BUS+ of the direct current circuit and the sixth connection point P6 in the direct current circuit through the fifth switching transistor Q15, to flow to the midpoint or the virtual midpoint N of the alternating current circuit. In this way, the first alternating current source 101, the first inductor L11, the first switching transistor Q11, the fifth switching transistor Q15, and a direct current load form a closed loop, a voltage of the first switching transistor Q11 may increase, and a voltage of the second switching transistor Q12 may reduce. In addition, the first alternating current source 101, the second inductor L12, the third switching transistor Q13, the fifth switching transistor Q15, and the direct current load form another closed loop, a voltage of the third switching transistor Q13 may increase, and a voltage of the fourth switching transistor Q14 may reduce. After the voltage of the first switching transistor Q11 and the voltage of the third switching transistor Q13 increase, the first switching transistor Q11 and the third switching transistor Q13 may be turned on till the current of the first inductor L11 flows reversely. In this case, as shown in FIG. 10C, a direct current output by the first capacitor C1 in the direct current circuit may flow to the fifth switching transistor Q15, the first switching transistor Q11, the first inductor L11, and the first alternating current source 101, and the direct current output by the first capacitor C1 in the direct current circuit may further flow to the fifth switching transistor Q15, the third switching transistor Q13, the second inductor L12, and the first alternating current source 101, so that the first switching transistor Q11 and the third switching transistor Q13 may be turned off, thereby reducing the voltages of the first switching transistor Q11 and the third switching transistor Q13. When the port voltages of the second switching transistor Q12 and the fourth switching transistor Q14 are 0, the second switching transistor Q12 and the fourth switching transistor Q14 are turned on, to perform circulation control on a switching transistor in Case 1 to be turned on or off.

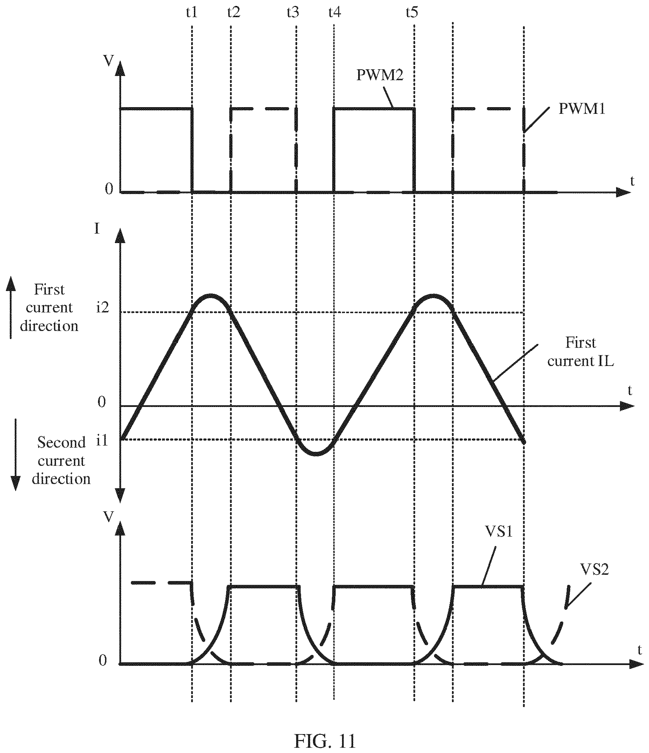

For a waveform diagram of a switching transistor, refer to FIG. 11. FIG. 11 uses the first switching transistor Q11 and the second switching transistor Q12 in the first bridge arm 211 as an example. It is assumed that a control signal of the first switching transistor Q11 is PWM1, a control signal of the second switching transistor Q12 is PWM2, the voltage of the first switching transistor Q11 is VS1, the voltage of the second switching transistor Q12 is VS2, and the current of the first inductor L11 is a first current IL. As shown in FIG. 11, after the entire PFC circuit reaches a steady state, when a direction of the first current IL is a first current direction and a value is i2 (that is, at a moment t1 shown in the figure), the PWM1 and the PWM2 may be controlled to be at a low level. In this case, the second switching transistor Q12 is turned off, and the voltage of the first switching transistor Q11 increases, so that the PWM1 may be controlled to be at a high level, and the first switching transistor Q11 is turned on (that is, at a moment t2 shown in the figure). After the first switching transistor Q11 is turned on, the first current IL gradually decreases till the direction of the first current IL is a second current direction and the value is i1 (that is, at a moment t3 shown in the figure), and the PWM1 and the PWM2 may be controlled to be at a low level. In this case, the first switching transistor Q11 is turned off, and the entire circuit returns to a state in which both the first switching transistor Q11 and the second switching transistor Q12 are turned off. When the port voltage of the second switching transistor Q12 is 0, the second switching transistor Q12 may be turned on. The control module 22 may continue to repeat the foregoing control on the first switching transistor Q11 and the second switching transistor Q12 to be turned on or off.

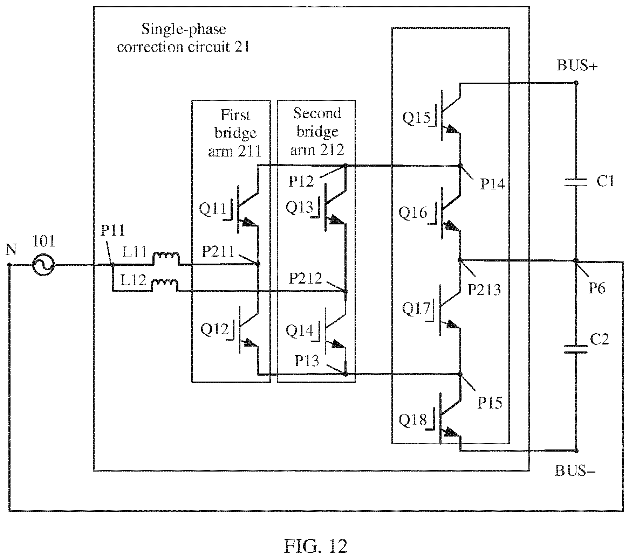

Case 2: The input signal of the single-phase correction circuit is from the alternating current circuit, and is in the negative half cycle. For a schematic circuit diagram of a closed loop formed by a switching transistor that is turned on in Case 2, refer to FIG. 12. As shown in FIG. 12, the control module may first control the first switching transistor Q11, the third switching transistor Q13, the sixth switching transistor Q16, and the eighth switching transistor Q18 to be turned on, and the second switching transistor Q12, the fourth switching transistor Q14, the fifth switching transistor Q15, and the seventh switching transistor Q17 to be turned off. In this way, an output current of a single-phase alternating current output by the first alternating current source 101 may flow to the first switching transistor Q11 through the first inductor L11, and may further flow to the third switching transistor Q13 through the second inductor L12, then flow to the sixth switching transistor Q16 through the first switching transistor Q11 and the third switching transistor Q13, to flow to the sixth connection point P6 of the direct current circuit, and flow to the alternating current circuit through the sixth connection point and the midpoint or the virtual midpoint N of the alternating current circuit. In this case, the current of the first inductor L11 is equal to the first preset current, and the first switching transistor Q11 and the third switching transistor Q13 are turned off. Then, the output current of the single-phase alternating current output by the first alternating current source 101 may flow to the eighth switching transistor Q18 through the second switching transistor Q12, and may further flow to the eighth switching transistor Q18 through the fourth switching transistor Q14, flow to the negative bus of the direct current circuit through the eighth switching transistor Q18 to the sixth connection point P6, and flow to the alternating current circuit through the sixth connection point P6 and the midpoint or the virtual midpoint N of the alternating current circuit. Voltages of the second switching transistor Q12 and the fourth switching transistor Q14 may increase. After the voltages of the second switching transistor Q12 and the fourth switching transistor Q14 increase, the second switching transistor Q12 and the fourth switching transistor Q14 may be turned on till the current of the second inductor L12 flows reversely. In this case, a direct current output by the second capacitor C2 of the direct current circuit may flow to the second switching transistor Q12, the first inductor L11, and the first alternating current source 101 through the eighth switching transistor Q18, and the direct current output by the second capacitor C2 of the direct current circuit may flow to the fourth switching transistor Q14, the second inductor L12, and the first alternating current source 101 through the eighth switching transistor Q18. The second switching transistor Q12 and the fourth switching transistor Q14 may be turned off, the voltages of the second switching transistor Q12 and the fourth switching transistor Q14 reduce. When the port voltages of the first switching transistor Q11 and the third switching transistor Q13 are 0, the first switching transistor Q11 and the third switching transistor Q13 are turned on, to perform circulation control on a switching transistor in Case 2 to be turned on or off.

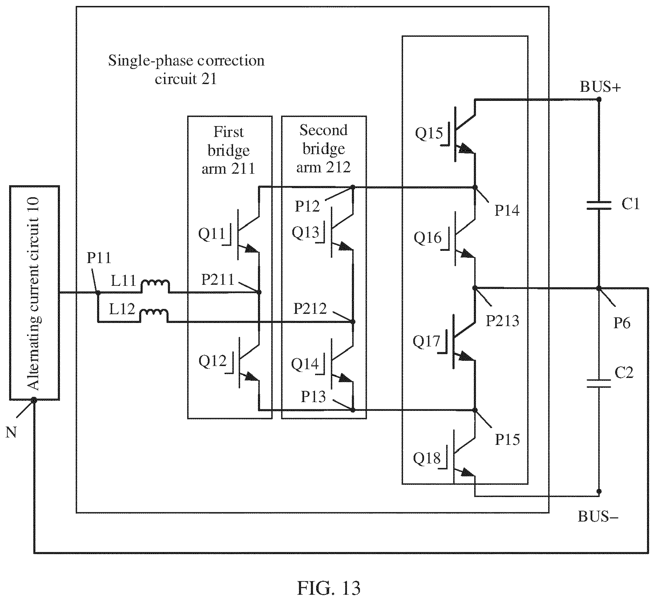

Case 3: The input signal of the single-phase correction circuit is from the direct current circuit and is in the positive half cycle. For a schematic circuit diagram of a closed loop formed by a switching transistor that is turned on in Case 3, refer to FIG. 13. As shown in FIG. 13, the control module may first control the first switching transistor Q11, the third switching transistor Q13, the fifth switching transistor Q15, and the seventh switching transistor Q17 to be turned on, and the sixth switching transistor Q16, the eighth switching transistor Q18, the second switching transistor Q12, and the fourth switching transistor Q14 to be turned off. In this way, a direct current output by the first capacitor C1 of the direct current circuit may flow to the first switching transistor Q11 through the fifth switching transistor Q15, flow to the alternating current circuit 10 through the first inductor L11, and flow to the direct current circuit through the midpoint or the virtual midpoint N in the alternating current circuit 10 and the sixth connection point P6 in the direct current circuit, to form a closed loop. The direct current output by the first capacitor C1 in the direct current circuit may flow to the third switching transistor Q13 through the fifth switching transistor Q15, flow to the alternating current circuit 10 through the second inductor L12, and flow to the direct current circuit through the midpoint or the virtual midpoint N in the alternating current circuit 10 and the sixth connection point in the direct current circuit, to form another closed loop. In this case, the current of the first inductor L11 is equal to the first preset current, and the first switching transistor Q11 and the third switching transistor Q13 are turned off. Then, the direct current output by the first capacitor C1 in the direct current circuit from the sixth connection point P6 may flow to the second switching transistor Q12 through the seventh switching transistor Q17, flow to the alternating current circuit 10 through the first inductor 1.11, and flow to the direct current circuit through the midpoint or the virtual midpoint N in the alternating current circuit 10 and the sixth connection point P6 in the direct current circuit. In addition, the direct current output by the first capacitor C1 in the direct current circuit from the sixth connection point P6 may flow to the fourth switching transistor Q14 through the seventh switching transistor Q17, flow to the alternating current circuit 10 through the second inductor L12, and flow to the direct current circuit through the midpoint or the virtual midpoint N in the alternating current circuit 10 and the sixth connection point P6 in the direct current circuit. In this way, voltages of the second switching transistor Q12 and the fourth switching transistor Q14 may increase. After the voltages of the second switching transistor Q12 and the fourth switching transistor Q14 increase, the second switching transistor Q12 and the fourth switching transistor Q14 may be turned on till the current of the second inductor L12 flows reversely. In this case, an alternating current output by the alternating current circuit may flow to the seventh switching transistor Q17 through the first inductor 1.11 and the second switching transistor Q12, and may further flow to the seventh switching transistor Q17 through the second inductor L12 and the fourth switching transistor Q14, to flow to the sixth connection point P6 in the direct current circuit through the seventh switching transistor Q17, and flow to the alternating current circuit 10 through the sixth connection point P6 in the direct current circuit and the midpoint or the virtual midpoint N in the alternating current circuit 10. Voltages of the first switching transistor Q11 and the third switching transistor Q13 increase. When the port voltages of the first switching transistor Q11 and the third switching transistor Q13 are 0, the first switching transistor Q11 and the third switching transistor Q13 are turned on, to perform circulation control on a switching transistor in Case 3 to be turned on or off.

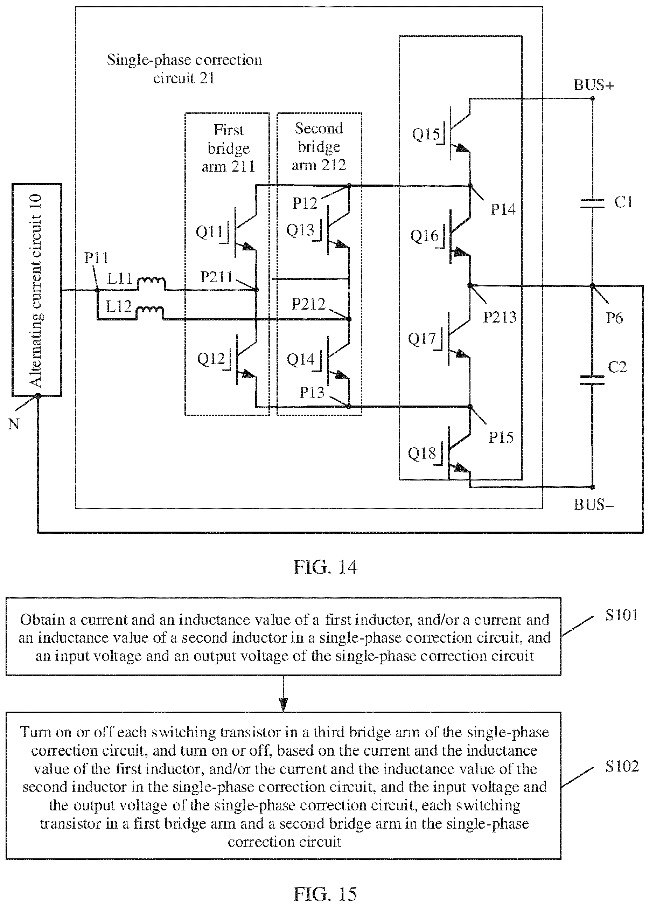

Case 4: The input signal of the single-phase correction circuit is from the direct current circuit, and is in the negative half cycle. For a schematic circuit diagram of a closed loop formed by a switching transistor that is turned on in Case 4, refer to FIG. 14. As shown in FIG. 14, the control module controls the second switching transistor Q12, the fourth switching transistor Q14, the sixth switching transistor Q16, and the eighth switching transistor Q18 to be turned on, and the fifth switching transistor Q15, the seventh switching transistor Q17, the first switching transistor Q11, and the third switching transistor Q13 to be turned off. In this way, a direct current output by the second capacitor C2 in the direct current circuit may flow to the second switching transistor Q12 through the eighth switching transistor Q18, flow to the alternating current circuit 10 through the first inductor L11, and flow to a direct current circuit through the midpoint or the virtual midpoint N in the alternating current circuit 10 and the sixth connection point P6 in the direct current circuit, to form a closed loop. The output current of the direct current output by the second capacitor C2 of the direct current circuit may further flow to the fourth switching transistor Q14 through the eighth switching transistor Q18, flow to the alternating current circuit 10 through the second inductor L12, and flow to the direct current circuit through the midpoint or the virtual midpoint N in the alternating current circuit 10 and the sixth connection point P6 in the direct current circuit, to form a closed loop. In this case, the current of the second inductor L12 is equal to the second preset current, and the second switching transistor Q12 and the fourth switching transistor Q14 are turned off. Then, the direct current output by the second capacitor C2 in the direct current circuit may flow to the first switching transistor Q11 through the sixth switching transistor Q16, flow to the alternating current circuit 10 through the first inductor L11, and flow to the direct current circuit through the midpoint or the virtual midpoint N in the alternating current circuit 10 and the sixth connection point P6 in the direct current circuit. The direct current output by the second capacitor C2 in the direct current circuit may further flow to the third switching transistor Q13 through the sixth switching transistor Q16, flow to the alternating current circuit 10 through the second inductor L12, and flow to the direct current circuit through the midpoint or the virtual midpoint N in the alternating current circuit 10 and the sixth connection point P6 in the direct current circuit. Voltages of the first switching transistor Q11 and the third switching transistor Q13 may increase. After the voltages of the first switching transistor Q11 and the third switching transistor Q13 increase, the first switching transistor Q11 and the third switching transistor Q13 may be turned on till the current of the first inductor L11 flows reversely. In this case, an alternating current output by the alternating current circuit 10 may flow to the sixth switching transistor Q16 through the first inductor L11 and the first switching transistor Q11, and may further flow to the sixth switching transistor Q16 through the second inductor L12 and the third switching transistor Q13, to flow to the direct current circuit through the sixth switching transistor Q16, and flow to the alternating current circuit through the sixth connection point P6 of the direct current circuit and the midpoint or the virtual midpoint N of the alternating current circuit 10, so that the voltages of the first switching transistor Q11 and the third switching transistor Q13 may reduce. When the port voltages of the second switching transistor Q12 and the fourth switching transistor Q14 are 0, the second switching transistor Q12 and the fourth switching transistor Q14 are turned on, to perform circulation control of a switching transistor in Case 4 to be turned on or off.

FIG. 15 is a schematic flowchart of a control method for a PFC circuit according to an embodiment of this application. The control method for the PFC circuit may be specifically executed by the control module 22 described above, and the PFC circuit may include a first inductor, a second inductor, a first bridge arm, a second bridge arm, and a third bridge arm. The first bridge arm, the second bridge arm, and the third bridge arm each include at least two switching transistors. A first connection point of the first inductor and the second inductor is connected to a single-phase input/output end of an alternating current circuit, the first inductor is connected to the first bridge arm, the second inductor is connected to the second bridge arm, the first bridge arm and the second bridge arm are connected in parallel to a second connection point and a third connection point, the second connection point and the third connection point are connected to the third bridge arm, and the third bridge arm is connected to a direct current circuit. As shown in FIG. 15, the method includes step S101 and step S102.

S101: Obtain a current and an inductance value of the first inductor, and/or a current and an inductance value of the second inductor in the single-phase correction circuit, and an input voltage and an output voltage of the single-phase correction circuit.

For step S101, refer to the description in FIG. 9. The current of the first inductor and/or the current of the second inductor in the single-phase correction circuit are detected through the current detection unit 222, and the input voltage and the output voltage of the single-phase correction circuit are detected through the voltage detection unit 223. Details are not described herein again.

S102: Turn on or off each switching transistor in the third bridge arm in the single-phase correction circuit, and turn on or off, based on the current and the inductance value of the first inductor, and/or the current and the inductance value of the second inductor in the single-phase correction circuit, and the input voltage and the output voltage of the single-phase correction circuit, each switching transistor in the first bridge arm and the second bridge arm in the single-phase correction circuit.

In some possible implementations, step S102 may include the following step: obtaining, based on the current and the inductance value of the first inductor, and/or the current and the inductance value of the second inductor in the single-phase correction circuit, and the input voltage and the output voltage of the single-phase correction circuit, a port voltage of at least one switching transistor in the first bridge arm and the second bridge arm in the single-phase correction circuit; and turning on or off, based on at least one of the current of the first inductor and the current of the second inductor in the single-phase correction circuit, and the port voltage of the switching transistor, each switching transistor in the first bridge arm and the second bridge arm in the single-phase correction circuit. In this way, through a value and a direction of a current of an inductor in the single-phase correction circuit, and/or the port voltage of the switching transistor, the switching transistor in the single-phase correction circuit is controlled to be turned on or off, so that a turn-on loss and a switching loss of die PFC circuit may be reduced, accuracy of power control is improved, and performance of the PFC circuit can be improved.

In some possible implementations, the first bridge arm includes a first switching transistor, a second switching transistor, and a first bridge arm midpoint, and the second bridge arm includes a third switching transistor, a fourth switching transistor, and a second bridge arm midpoint. The first switching transistor and the second switching transistor are connected in series to the first bridge arm midpoint, the first bridge arm midpoint is connected to the first inductor, the third switching transistor and the fourth switching transistor are connected in series to the second bridge arm midpoint, the second bridge arm midpoint is connected to the second inductor, a connection point of the first switching transistor and the third switching transistor is referred to as a second connection point, and a connection point of the second switching transistor and the fourth switching transistor is referred to as a third connection point.

When an input signal of the single-phase correction circuit is from the alternating current circuit and is in a positive half cycle, or when an input signal of the single-phase correction circuit is from the direct current circuit and is in a negative half cycle, a primary switching transistor in the first bridge arm in the single-phase correction circuit is the second switching transistor, and a primary switching transistor in the second bridge arm in the single-phase correction circuit is the fourth switching transistor; or when an input signal of the single-phase correction circuit is from the alternating current circuit and is in a negative half cycle, or when an input signal of the single-phase correction circuit is from die direct current circuit and is in a positive half cycle, a primary switching transistor in the first bridge arm in the single-phase correction circuit is the first switching transistor, and a primary switching transistor in the second bridge arm in the single-phase correction circuit is the third switching transistor.

The turning on or off, based on at least one of the current of the first inductor and the current of the second inductor in the single-phase correction circuit, and the port voltage of die switching transistor, each switching transistor in the first bridge arm and the second bridge arm in the single-phase correction circuit may include the following steps: when the current of the first inductor in the single-phase correction circuit is equal to a first preset current, or the current of the second inductor in the single-phase correction circuit is equal to a second preset current, turning off a primary switching transistor that is turned on and that is in the first bridge arm and the second bridge arm in the single-phase correction circuit; after a port voltage of a switching transistor connected in series to the primary switching transistor increases, turning on the switching transistor connected in series to the primary switching transistor; when the current of the first inductor flows reversely, or the current of the second inductor flows reversely, turning off the switching transistor connected in series to the primary switching transistor; and when a port voltage of the primary switching transistor is equal to 0, turning on the primary switching transistor.

It may be understood that, when the current of the first inductor in the single-phase correction circuit is equal to the first preset current, it indicates that a voltage of a switching transistor in the first bridge arm connected to the first inductor changes, and a voltage change value is a value of the input voltage. When the current of the second inductor in the single-phase correction circuit is equal to the second preset current, the second switching transistor is turned off, a voltage of a switching transistor in the second bridge arm connected to the second inductor changes, and a voltage change value is the value of the input voltage. Therefore, a switching transistor in an on state may be turned off, a voltage of a switching transistor connected in series to the switching transistor may increase, and then the switching transistor is turned on again. In addition, the switching transistor is turned off when a voltage of the switching transistor flows reversely, and a primary switching transistor is turned on when a port voltage of the primary switching transistor reduces to 0, so that zero-voltage turn-on of the primary switching transistor in the first bridge arm and the second bridge arm may be implemented by using a ZVS technology, a turn-on loss and a switching loss of the PFC circuit may be reduced, and performance of the PFC circuit may be improved.

In some possible implementations, the third bridge arm includes a fifth switching transistor, a sixth switching transistor, a seventh switching transistor, an eighth switching transistor, a fourth connection point, a fifth connection point, and a third bridge arm midpoint. The fifth switching transistor and the sixth switching transistor are connected in series to the fourth connection point, the fourth connection point is connected to the second connection point, the seventh switching transistor and the eighth switching transistor are connected in series to the fifth connection point, the fifth connection point is connected to the third connection point, the sixth switching transistor and the seventh switching transistor are connected in series to the third bridge arm midpoint, and a drain end of the fifth switching transistor, a source end of the eighth switching transistor, and the third bridge arm midpoint are connected to the direct current circuit.

In a possible implementation, the direct current circuit includes a positive bus, a negative bus, a first capacitor, a second capacitor, and a sixth connection point. The drain end of the fifth switching transistor and the first capacitor are connected to the positive bus, the source end of the eighth switching transistor and the second capacitor are connected to the negative bus, the first capacitor and the second capacitor are connected in series to the sixth connection point, and the sixth connection point is connected to the third bridge arm midpoint and a midpoint or a virtual midpoint of the alternating current circuit.

In some possible implementations, the turning on or off each switching transistor in the third bridge arm in the single-phase correction circuit may include the following step: when the input signal of the single-phase correction circuit is in the positive half cycle, controlling the fifth switching transistor and the seventh switching transistor in the single-phase correction circuit to be turned on and the sixth switching transistor and the eighth switching transistor in the single-phase correction circuit to be turned off; or when the input signal of the single-phase correction circuit is in the negative half cycle, controlling the sixth switching transistor and the eighth switching transistor in the single-phase correction circuit to be turned on and the fifth switching transistor and the seventh switching transistor in the single-phase correction circuit to be turned off. In this way, when the positive bus of the direct current circuit is connected to the first capacitor, and the negative bus of the direct current circuit is connected to the second capacitor, a capacitor in the direct current circuit may be selected to perform charging or discharging through a switching transistor that is turned on and that is in the third bridge arm.

In a possible implementation, a frequency of each switching transistor in the first bridge arm and the second bridge arm is equal, and is greater than a frequency of each switching transistor in the third bridge arm.

In the control method shown in FIG. 15, by controlling each switching transistor in the first bridge arm, the second bridge arm, and the third bridge arm in the single-phase correction circuit to be turned on or off, a turn-on loss and a switching loss of the PFC circuit can be reduced, power factor correction and bidirectional power supply between the alternating current circuit and the direct current circuit are implemented, applicability and stability of the PFC circuit are improved, and performance of the PFC circuit can be improved. In addition, based on the current and the inductance value of the first inductor, and/or the current and the inductance value of the second inductor in the single-phase correction circuit, and the input voltage and the output voltage of the single-phase correction circuit, each switching transistor in the first bridge arm and the second bridge arm in the single-phase correction circuit is turned on or off, thereby improving accuracy of power control, and further improving applicability and stability of the PFC circuit.

An embodiment of this application further provides an electric vehicle, including a power battery, a DC/DC converter, and the PFC circuit described in the first aspect. An input side of the PFC circuit is connected to an alternating current charging pile, an output side of the PFC circuit is connected to an input side of the DC/DC converter, and an output side of the DC/DC converter is connected to the power battery. The PFC circuit is configured to: perform power factor correction on an alternating current voltage output by the alternating current charging pile, and convert the alternating current voltage into a direct current of a first voltage value output to the DC/DC converter. The DC/DC converter is configured to convert the direct current of the first voltage value into a direct current of a second voltage value output to the power battery, so that the alternating current charging pile may charge the power battery in the electric vehicle.

An embodiment of this application further provides another electric vehicle, including a power battery, a DC/DC converter, and the PFC circuit described in the first aspect. An output side of the power battery is connected to an input side of the DC/DC converter, an output side of the DC/DC converter is connected to an input side of the PFC circuit, and an output side of the PFC circuit is connected to an alternating current load. The DC/DC converter is configured to convert a direct current of a second voltage value output by the power battery into a direct current of a first voltage value output to the PFC circuit. The PFC circuit is configured to: perform power factor correction on the direct current of the first voltage value, and convert the direct current into an alternating current output to the alternating current load, so that the alternating current load may be charged through the power battery in the electric vehicle, thereby improving applicability of the PFC circuit

An embodiment of this application further provides a direct current charging pile, including a charging plug, a DC/DC converter, and the PFC circuit described in the first aspect. An input end of the PFC circuit is connected to an alternating current mains, an output end of the PFC circuit is connected to an input side of the DC/DC converter, and an output side of the DC/DC converter is connected to the charging plug. The PFC circuit is configured to: perform power factor correction on an alternating current output by the alternating current mains, and convert the alternating current into a direct current of a first voltage value output to the DC/DC converter. The DC/DC converter is configured to convert the direct current of the first voltage into a direct current of a second voltage output to the power battery when the charging plug is connected to the power battery of the electric vehicle, so that the direct current charging pile may charge the power battery in the electric vehicle.

An embodiment of this application further provides a power supply system, including a PFC circuit, an alternating current power source, and a direct current load. The PFC circuit is configured to: perform power factor correction on an alternating current provided by the alternating current power source, and convert the alternating current into a direct current output to the direct current load.

An embodiment of this application further provides another power supply system, including a PFC circuit, an alternating current load, and a direct current power source. The PFC circuit is configured to: perform power factor correction on a direct current output by the direct current power source, and convert the direct current into an alternating current output to the alternating current load.

An embodiment of this application further provides a chip system, including a processor, a memory, and an interface circuit. The memory, the interface circuit, and the processor are interconnected through a line, and the memory stores instructions. When the instructions are executed by the processor, the foregoing procedure of the control method for the PFC circuit is implemented.

An embodiment of this application further provides a computer device, including a memory and a processor connected to the memory. The memory is configured to store a computer program, and the processor is configured to invoke the computer program, so that the computer device performs the foregoing control method for the PFC circuit.

An embodiment of this application further provides a computer-readable storage medium. The computer-readable storage medium stores a computer program, and the computer program is loaded and executed by a processor, so that a computer device having the processor performs the foregoing control method for the PFC circuit.

An embodiment of this application further provides a computer program product. The computer program product includes computer-executable instructions. The computer-executable instructions are stored in a computer-readable storage medium. A processor of a computer device reads the computer instructions from the computer-readable storage medium, and the processor executes the computer instructions, so that the computer device performs the foregoing control method for the PFC circuit.

In conclusion, in embodiments of this application, by controlling each switching transistor in the first bridge arm, the second bridge arm, and the third bridge arm in the single-phase correction circuit to be turned on or off, a turn-on loss and a switching loss of the PFC circuit can be reduced, power factor correction and bidirectional power supply between the alternating current circuit and the direct current circuit are implemented, applicability and stability of the PFC circuit are improved, and performance of the PFC circuit can be improved. In addition, based on the current and the inductance value of the first inductor, and/or the current and the inductance value of the second inductor in the single-phase correction circuit, and the input voltage and the output voltage of the single-phase correction circuit, each switching transistor in the first bridge arm and the second bridge arm in the single-phase correction circuit is turned on or off, thereby improving accuracy of power control, and further improving applicability and stability of the PFC circuit.

It may be clearly understood by a person skilled in the art that, for the purpose of convenient and brief description, for a detailed working process of the foregoing apparatus and unit, refer to a corresponding process in the foregoing method embodiments, and details are not described herein again.

In addition, functional units in embodiments of this application may be integrated into one processing unit, or each of the units may exist alone physically, or two or more units are integrated into one unit. The integrated unit may be implemented in a form of hardware, or may be implemented in a form of hardware plus a software functional unit.

It should be noted that, in this application, "at least one" means one or more, and "a plurality of" means two or more. In addition, "and/or" describes an association relationship between associated objects, and represents that three relationships may exist. For example, A and/or B may represent the following cases: Only A exists, both A and B exist, and only B exists, where A and B may be singular or plural. In the specification, claims, and accompanying drawings of this application, the terms "first", "second", "third", "fourth", and so on (if existent) are intended to distinguish between similar objects but do not necessarily indicate a specific order or sequence. In this application, "connection" may refer to a direct connection, an indirect connection, a coupling, or the like. The connection may also be referred to as a coupling, an electrical connection, or the like. This is not limited herein.

Embodiments in this specification are all described in a progressive manner, for same or similar parts in embodiments, reference may be made to these embodiments, and each embodiment focuses on a difference from other embodiments. The method disclosed in the embodiments corresponds to the apparatus disclosed in the embodiments, and therefore is briefly described. For related parts, refer to the description of the apparatus.

It should be noted that, for brief description, the foregoing method embodiments are represented as a series of actions. However, a person skilled in the art should learn that this application is not limited to the described order of the actions, because according to this application, some steps may be performed in other orders or simultaneously.

The steps of the method in embodiments of this application may be adjusted in sequence, combined, or deleted based on an actual requirement.

The implementations of this application may be randomly combined, to achieve different technical effects.

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or a part of the procedures or functions are generated according to this application. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk)), or the like.

In conclusion, the foregoing descriptions are merely embodiments of the technical solutions of the present invention, but are not intended to limit the protection scope of the present invention. Any modification, equivalent replacement, or improvement made according to the disclosure of the present invention shall fall within the protection scope of the present invention.

## Claims

1. A power factor correction PFC circuit, wherein the PFC circuit comprises a control module and at least one single-phase correction circuit, the single-phase correction circuit comprises a first inductor, a second inductor, a first bridge arm, a second bridge arm, and a third bridge arm, a first connection point of the first inductor and the second inductor is connected to a single-phase input/output end of an alternating current circuit, the first inductor is connected to the first bridge arm, the second inductor is connected to the second bridge arm, the first bridge arm and the second bridge arm are connected in parallel to a second connection point and a third connection point, the second connection point and the third connection point are connected to the third bridge arm, the third bridge arm is connected to a direct current circuit, and the first bridge arm, the second bridge arm, and the third bridge arm each comprise at least two switching transistors;
the control module is configured to control each switching transistor in the first bridge arm, the second bridge arm, and the third bridge arm in the single-phase correction circuit to be turned on or off; and
the single-phase correction circuit is configured to perform power factor correction on a single-phase alternating current provided by the alternating current circuit and convert the single-phase alternating current into a direct current output to the direct current circuit, or perform power factor correction on a direct current provided by the direct current circuit and convert the direct current into a single-phase alternating current output to the alternating current circuit.

2. The PFC circuit according to claim 1, wherein the first bridge arm comprises a first switching transistor, a second switching transistor, and a first bridge arm midpoint, and the second bridge arm comprises a third switching transistor, a fourth switching transistor, and a second bridge arm midpoint, wherein
the first switching transistor and the second switching transistor are connected in series to the first bridge arm midpoint, the first bridge arm midpoint is connected to the first inductor, the third switching transistor and the fourth switching transistor are connected in series to the second bridge arm midpoint, the second bridge arm midpoint is connected to the second inductor, a connection point of the first switching transistor and the third switching transistor is referred to as the second connection point, and a connection point of the second switching transistor and the fourth switching transistor is referred to as the third connection point.

3. The PFC circuit according to claim 2, wherein the control module is configured to: obtain, based on a current and an inductance value of the first inductor, and/or a current and an inductance value of the second inductor in the single-phase correction circuit, and an input voltage and an output voltage of the single-phase correction circuit, a port voltage of at least one switching transistor in the first bridge arm and the second bridge arm in the single-phase correction circuit, wherein the port voltage of the switching transistor is a voltage between a drain end and a source end of the switching transistor;
and turn on or off, based on at least one of the current of the first inductor and the current of the second inductor in the single-phase correction circuit, and the port voltage of the switching transistor, each switching transistor in the first bridge arm and the second bridge arm in the single-phase correction circuit

4. The PFC circuit according to claim 3, wherein when an input signal of the single-phase correction circuit is from the alternating current circuit and is in a positive half cycle, or when an input signal of the single-phase correction circuit is from the direct current circuit and is in a negative half cycle, a primary switching transistor in the first bridge arm in the single-phase correction circuit is the second switching transistor, and a primary switching transistor in the second bridge arm in the single-phase correction circuit is the fourth switching transistor; or when an input signal of the single-phase correction circuit is from the alternating current circuit and is in a negative half cycle, or when an input signal of the single-phase correction circuit is from the direct current circuit and is in a positive half cycle, a primary switching transistor in the first bridge arm in the single-phase correction circuit is the first switching transistor, and a primary switching transistor in the second bridge arm in the single-phase correction circuit is the third switching transistor; and
the control module is configured to: when the current of the first inductor in the single-phase correction circuit is equal to a first preset current, or the current of the second inductor in the single-phase correction circuit is equal to a second preset current, turn off a primary switching transistor that is turned on and that is in the first bridge arm and the second bridge arm in the single-phase correction circuit; after a port voltage of a switching transistor connected in series to the primary switching transistor increases, turn on the switching transistor connected in series to the primary switching transistor; when the current of the first inductor flows reversely or the current of the second inductor flows reversely, turn off the switching transistor connected in series to the primary switching transistor; and when a port voltage of the primary switching transistor is equal to 0, turn on the primary switching transistor.

5. The PFC circuit according to any one of claims 1 to 4, wherein the third bridge arm comprises a fifth switching transistor, a sixth switching transistor, a seventh switching transistor, an eighth switching transistor, a fourth connection point, a fifth connection point, and a third bridge arm midpoint, wherein
the fifth switching transistor and the sixth switching transistor are connected in series to the fourth connection point, the fourth connection point is connected to the second connection point, the seventh switching transistor and the eighth switching transistor are connected in series to the fifth connection point, the fifth connection point is connected to the third connection point, the sixth switching transistor and the seventh switching transistor are connected in series to the third bridge arm midpoint, and a drain end of the fifth switching transistor, a source end of the eighth switching transistor, and the third bridge arm midpoint are connected to the direct current circuit.

6. The PFC circuit according to claim 5, wherein the direct current circuit comprises a positive bus, a negative bus, a first capacitor, a second capacitor, and a sixth connection point, wherein
the drain end of the fifth switching transistor and the first capacitor are connected to the positive bus, the source end of the eighth switching transistor and the second capacitor are connected to the negative bus, the first capacitor and the second capacitor are connected in series to the sixth connection point, and the sixth connection point is connected to the third bridge arm midpoint and a midpoint or a virtual midpoint of the alternating current circuit.

7. The PFC circuit according to claim 5, wherein the control module is configured to: when the input signal of the single-phase correction circuit is in the positive half cycle, control the fifth switching transistor and the seventh switching transistor in the single-phase correction circuit to be turned on and the sixth switching transistor and the eighth switching transistor in the single-phase correction circuit to be turned off; or when the input signal of the single-phase correction circuit is in the negative half cycle, control the sixth switching transistor and the eighth switching transistor in the single-phase correction circuit to be turned on and the fifth switching transistor and the seventh switching transistor in the single-phase correction circuit to be turned off.

8. The PFC circuit according to any one of claims 1 to 7, wherein a frequency of each switching transistor in the first bridge arm and the second bridge arm is equal, and is greater than a frequency of each switching transistor in the third bridge arm.

9. A control method for a PFC circuit, wherein the PFC circuit comprises a control module and at least one single-phase correction circuit, the single-phase correction circuit comprises a first inductor, a second inductor, a first bridge arm, a second bridge arm, and a third bridge arm, a first connection point of the first inductor and the second inductor is connected to a single-phase input/output end of an alternating current circuit, the first inductor is connected to the first bridge arm, the second inductor is connected to the second bridge arm, the first bridge arm and the second bridge arm are connected in parallel to a second connection point and a third connection point, the second connection point and the third connection point are connected to the third bridge arm, the third bridge arm is connected to a direct current circuit, and the first bridge arm, the second bridge arm, and the third bridge arm each comprise at least two switching transistors; and
the control method comprises:
obtaining, by using the control module, a current and an inductance value of the first inductor, and/or a current and an inductance value of the second inductor in the single-phase correction circuit, and an input voltage and an output voltage of the single-phase correction circuit; and
turning on or off, by using the control module, each switching transistor in the third bridge arm in the single-phase correction circuit, and turning on or off, based on the current and the inductance value of the first inductor, and/or the current and the inductance value of the second inductor in the single-phase correction circuit, and the input voltage and the output voltage of the single-phase correction circuit, each switching transistor in the first bridge arm and the second bridge arm in the single-phase correction circuit.

10. The control method according to claim 9, wherein the turning on or off, based on the current and the inductance value of the first inductor, and/or the current and the inductance value of the second inductor in the single-phase correction circuit, and the input voltage and the output voltage of the single-phase correction circuit, each switching transistor in the first bridge arm and the second bridge arm in the single-phase correction circuit comprises:
obtaining, based on the current and die inductance value of the first inductor, and/or the current and the inductance value of the second inductor in the single-phase correction circuit, and the input voltage and the output voltage of the single-phase correction circuit, a port voltage of at least one switching transistor in the first bridge arm and the second bridge arm in the single-phase correction circuit, wherein the port voltage of the switching transistor is a voltage between a drain end and a source end of the switching transistor; and
turning on or off, based on at least one of the current of the first inductor and the current of the second inductor in the single-phase correction circuit, and the port voltage of the switching transistor, each switching transistor in the first bridge arm and the second bridge arm in the single-phase correction circuit.

11. The control method according to claim 10, wherein the first bridge arm comprises a first switching transistor, a second switching transistor, and a first bridge arm midpoint, and the second bridge arm comprises a third switching transistor, a fourth switching transistor, and a second bridge arm midpoint; and the first switching transistor and the second switching transistor are connected in series to the first bridge arm midpoint, the first bridge arm midpoint is connected to the first inductor, the third switching transistor and the fourth switching transistor are connected in series to the second bridge arm midpoint, the second bridge arm midpoint is connected to the second inductor, a connection point of the first switching transistor and the third switching transistor is referred to as the second connection point, and a connection point of the second switching transistor and the fourth switching transistor is referred to as the third connection point;
when an input signal of the single-phase correction circuit is from the alternating current circuit and is in a positive half cycle, or when an input signal of the single-phase correction circuit is from the direct current circuit and is in a negative half cycle, a primary switching transistor in the first bridge arm in the single-phase correction circuit is the second switching transistor, and a primary switching transistor in the second bridge arm in the single-phase correction circuit is the fourth switching transistor;
when an input signal of the single-phase correction circuit is from the alternating current circuit and is in a negative half cycle, or when an input signal of the single-phase correction circuit is from the direct current circuit and is in a positive half cycle, a primary switching transistor in the first bridge arm in the single-phase correction circuit is the first switching transistor, and a primary switching transistor in the second bridge arm in the single-phase correction circuit is the third switching transistor; and
the turning on or off, based on at least one of the current of the first inductor and the current of the second inductor in the single-phase correction circuit, and the port voltage of the switching transistor, each switching transistor in the first bridge arm and the second bridge arm in the single-phase correction circuit comprises:
when the current of the first inductor in the single-phase correction circuit is equal to a first preset current, or the current of the second inductor in the single-phase correction circuit is equal to a second preset current, turning off a primary switching transistor that is turned on and that is in the first bridge arm and the second bridge arm in the single-phase correction circuit;
after a port voltage of a switching transistor connected in series to the primary switching transistor increases, turning on the switching transistor connected in series to the primary switching transistor;
when the current of the first inductor flows reversely, or the current of the second inductor flows reversely, turning off the switching transistor connected in series to the primary switching transistor; and
when a port voltage of the primary switching transistor is equal to 0, turning on the primary switching transistor.

12. An electric vehicle, comprising a power battery, a direct current DC/DC converter, and the PFC circuit according to any one of claims 1 to 8, wherein an input side of the PFC circuit is connected to an alternating current charging pile, an output side of the PFC circuit is connected to an input side of the DC/DC converter, and an output side of the DC/DC converter is connected to the power battery;
the PFC circuit is configured to: perform power factor correction on an alternating current provided by the alternating current charging pile, and convert the alternating current into a direct current of a first voltage value output to the DC/DC converter; and
the DC/DC converter is configured to convert the direct current of the first voltage value into a direct current of a second voltage value output to the power battery.

13. An electric vehicle, comprising a power battery, a DC/DC converter, and the PFC circuit according to any one of claims 1 to 8, wherein an output side of the power battery is connected to an input side of the DC/DC converter, an output side of the DC/DC converter is connected to an input side of the PFC circuit, and an output side of the PFC circuit is connected to an alternating current load;
the DC/DC converter is configured to convert a direct current of a second voltage value provided by the power battery into a direct current of a first voltage value output to the PFC circuit; and
the PFC circuit is configured to: perform power factor correction on the direct current of the first voltage value, and convert the direct current into an alternating current output for the alternating current load.

14. A charging pile, comprising a charging plug, a DC/DC converter, and the PFC circuit according to any one of claims 1 to 8, wherein an input end of the PFC circuit is connected to an alternating current mains, an output end of the PFC circuit is connected to an input side of the DC/DC converter, and an output side of the DC/DC converter is connected to the charging plug;
the PFC circuit is configured to: perform power factor correction on an alternating current output by the alternating current mains, and convert the alternating current into a direct current of a first voltage value output to the DC/DC converter; and
the DC/DC converter is configured to: when the charging plug is connected to a power battery of the electric vehicle, convert the direct current of the first voltage value into a direct current of a second voltage value output to the power battery.
